# EUROPÄISCHE PATENTSCHRIFT

(11) **EP 2 797 803 B1**
(45) Veröffentlichungstag und Bekanntmachung des Hinweises auf die Patenterteilung: **28.09.2016**
(21) Anmeldenummer: 12709790.5
(22) Anmeldetag: 27.02.2012
(51) Int. Cl.: B62B 1/20, B62B 5/00, B62B 5/06, B60R 9/06

(54) **HECKTRÄGER**
REAR CARRIER
PORTE-CHARGE ARRIÈRE

(30) Priorität: 14.12.2011 DE 202011109022 U; 01.02.2012 WO PCT/EP2012/000442; 02.02.2012 WO PCT/EP2012/001525
(43) Veröffentlichungstag der Anmeldung: 05.11.2014
(73) Patentinhaber: Siepmann, Ulrich, 46282 Dorsten (DE)
(72) Erfinder: Siepmann, Ulrich, 46282 Dorsten (DE)
(74) Vertreter: Von Rohr Patentanwälte Partnerschaft mbB
(86) Internationale Anmeldenummer: PCT/EP2012/000834
(87) Internationale Veröffentlichungsnummer: WO 2013/087125

(56) Entgegenhaltungen:
- DE-A1- 19 611 542
- DE-U1- 29 713 739
- DE-U1-202005 019 581
- FR-A- 867 582
- US-A1- 2007 126 192
- US-A1- 2009 146 394
- US-A1- 2009 232 633
- US-A1- 2010 066 069

## Beschreibung

Die Erfindung betrifft einen Heckträger zur vorzugsweise heckseitigen Anbringung an Fahrzeugen für den Transport von Lasten in einem fahrzeuggebundenen Transportzustand des Heckträgers mit einem eine Transportfläche aufweisenden Tragkörper zur Aufnahme der Last und/oder Ablage der Last auf der Transportfläche, mit einer Befestigungseinrichtung zur abnehmbaren Anbringung des Heckträgers an dem Fahrzeug, insbesondere an einem Personenkraftfahrzeug, und mit wenigstens einem Rad zum rollenden Transport des Heckträgers in einem vom Fahrzeug getrennten personengebundenen Transportzustand des Heckträgers, wobei die Radachse zumindest im personengebundenen Transportzustand gegenüber der Mitte der Transportfläche nach außen in Richtung zu einer ersten Außenseite des Tragkörpers versetzt angeordnet ist und wobei lediglich auf der ersten Außenseite des Tragkörpers das wenigstens eine Rad vorgesehen ist.

Heckträger sind aus dem Straßenverkehr bekannt. Sie dienen zum Transport von schweren oder leichten Lasten mit Fahrzeugen, wobei der Heckträger im fahrzeuggebundenen Transportzustand mit dem Fahrzeug fest verbunden ist und mit diesem mit aufgelegter Last transportiert wird. Heckträger üblicher Bauart sind Stahlkonstruktionen, die über einen Kupplungsverschluss mit der Anhängerkupplung eines Fahrzeugs verbindbar sind. Zum Beladen des Heckträgers ist es erforderlich, die zu transportierende Last von einem Bergungsort zum Fahrzeug zu transportieren, was durch Tragen der Last oder durch Verfahren der Last unter Verwendung eines Transportmittels, wie eine (Schub-)Karre erfolgen kann. Das Beladen des Heckträgers ist in jedem Fall kraftaufwendig und für einen Benutzer wenig komfortabel. Das Gleiche gilt für das spätere Entladen des Heckträgers nach dem fahrzeuggebundenen Transport der Last und den anschließenden Transport der Last vom Fahrzeug zu einem endgültigen Bestimmungsort. Hierzu muss die Last vom Heckträger abgehoben bzw. abgenommen werden, was kraftaufwendig ist. Der weitere Abtransport der Last kann dann wieder durch Tragen der Last oder durch Verfahren der Last unter Verwendung wenigstens eines weiteren Transportmittels erfolgen. Die Verwendung eines Transportmittels erleichtert zwar den personengebunden Transport der Last von einem Bergungsort zu dem Fahrzeug und später vom Fahrzeug zu einem endgültigen Bestimmungsort, macht es jedoch erforderlich, zwei Transportmittel bereit zu stellen, was kostenaufwendig ist. Zudem müssen die Transportmittel nach dem Transport der Last zusätzlich zum Heckträger abgestellt werden, was einen entsprechend großen Stellplatz erforderlich macht.

Zur Vereinfachung des Be- und Entladevorgangs sind aus dem Stand der Technik bereits Heckträger bekannt, die über eine Absenkeinrichtung einseitig absenkbar sind. Der Heckträger ist dabei aus einer Horizontalstellung nach unten schwenkbar an dem Fahrzeug angebracht, wobei die Last beim Absenken des Heckträgers auf der Transportfläche nach unten rutscht. Stoßempfindliche Lasten können beim Abrutschen beschädigt werden. Lasten, die wenig formstabil sind, können sich beim Abrutschen verformen, was das Entladen des Heckträgers erschweren kann.

Aufgabe der vorliegenden Erfindung ist es, einen Heckträger der eingangs genannten Art zur Verfügung zu stellen, der einen vereinfachten und wenig kraftaufwendigen Transport von Lasten bei hohem Benutzerkomfort ermöglicht. Insbesondere ist es Aufgabe der vorliegenden Erfindung, einen Heckträger mit einer erweiterten Funktionalität bereitzustellen, der sich vorteilhaft in neuen Anwendungsbereichen einsetzen lässt.

Aus der US2010/066069 A1 ist ein Heckträger gemäß dem Oberbegriff von Anspruch 1 bekannt, der vom Fahrzeug abnehmbar ist und durch festmontierte bzw. zusätzlich montierbare Räder mit einer aufgelegten Last von einer Person bewegt werden kann. Der vorgenannte Heckträger besitzt jedoch den Nachteil, dass das An- und Abkoppeln zum Fahrzeug sowie das Montieren der zusätzlichen Räder aufwendig ist und der Heckträger sich daher nur für bestimmte Einsatzgebiete vorteilhaft einsetzen lässt.

Aus der US2009/146394 A1, der US2009/232633 A1 und der US2007/126192 A1 sind darüber hinaus jeweils Karren bzw. Wagen bekannt, die über eine entsprechende Vorrichtung mit einem Fahrzeug koppelbar sind. Die dort beschriebenen Wagen verfügen jedoch ebenso über den gemeinsamen Nachteil einer stark aufwendigen Handhabung, insbesondere in Bezug auf die Kopplung mit einem Fahrzeug, sowie eine nur beschränkte Variabilität bezüglich ihrer möglichen Einsatzgebiete.

Zur Lösung der vorgenannten Aufgabe ist bei einem Heckträger der eingangs genannten Art erfindungsgemäß vorgesehen, dass die Befestigungseinrichtung mit einer fahrzeugseitigen Kugelkopf-Anhängerzugvorrichtung des Fahrzeugs durch Aufsetzen eines Kupplungselementes der Befestigungseinrichtung auf eine Kupplungskugel der Kugelkopf-Anhängerzugvorrichtung verbindbar ist und dass das Rad höhenverstellbar aus einer abgesenkten Stellung im personengebundenen Transportzustand in eine angehobene Stellung im fahrzeuggebundenen Transportzustand an dem Heckträger befestigt ist.

Vorzugsweise dient bei dem erfindungsgemäßen Heckträger die Befestigungseinrichtung ausschließlich oder zumindest im Wesentlichen zum Halten des Heckträgers. Die Hauptlast des Heckträgers wirkt dann Ober die Befestigungseinrichtung auf das Fahrzeug. Damit unterscheidet sich der erfindungsgemäße Heckträger von bekannten Anhängern, die über eine Befestigungseinrichtung mit einer Anhängerkupplung des Fahrzeugs befestigt sind, wobei die Verbindung zwischen der Befestigungseinrichtung und der Anhängerkupplung vorrangig zum Ziehen (und nicht zur Abstützung) des Anhängers vorgesehen ist.

Der Erfindung liegt der Grundgedanke zugrunde, dem Heckträger als Baueinheit eine neue Funktion zuzuordnen, wobei der Heckträger erfindungsgemäß nicht lediglich zum fahrzeuggebundenen Transport, dass heißt zum Transport mit dem Fahrzeug, sondern nach dem Lösen der Verbindung zum Fahrzeug auch direkt zum personengebunden Transport in der Art einer (Schub- bzw. Hand-)Karre oder eines Wagens oder dergleichen genutzt werden kann. Aufgrund eines geringen Rollwiderstandes lässt sich der Heckträger wenig kraftaufwendig zum personengebundenen Lastentransport einsetzen. Insbesondere lässt sich der Bergevorgang einer Last, insbesondere in schwierigem Gelände, durch Einsatz des erfindungsgemäßen Heckträgers erleichtern. Das gleiche gilt natürlich auch für den Abtransport der Last zu einem endgültigen Bestimmungsort. Eine Last kann folglich von dem Benutzer, insbesondere unter Einsatz von Muskelkraft, direkt mit dem Heckträger von einem Bergungsort zum Fahrzeug, mit diesem zu einem Zielort und nach dem fahrzeuggebundenen Transport zum Zielort vom Fahrzeug zu einem endgültigen Bestimmungsort der Last wieder personengebunden transportiert werden. Es ist bei Verwendung des erfindungsgemäßen Heckträgers weder erforderlich, die Last manuell zum Fahrzeug hin bzw. vom Fahrzeug abzutransportieren, noch müssen mehrere personengebundene Transportmittel bereitgehalten werden. Der Transportvorgang wird dadurch erheblich vereinfacht bei hohem Benutzerkomfort.

Vorzugsweise ist es hierbei noch nicht einmal erforderlich, die Last während des Transports umzuladen. Der beladene Heckträger kann sich zusammen mit der Last vom Boden anheben und am Fahrzeug anbringen lassen. Später kann der Heckträger ebenfalls zusammen mit der Last vom Fahrzeug abgenommen bzw. demontiert werden. Das Umladen der Last zwischen den personengebunden Transportzuständen und dem fahrzeuggebundenen Transportzustand entfällt, was zu einem hohen Benutzerkomfort beiträgt.

Erfindungsgemäß ist vorgesehen, dass das Rad in dem fahrzeuggebundenen Transportzustand des Heckträgers berührungsfrei zum Boden angeordnet bzw. im mit dem Fahrzeug verbundenen Zustand des Heckträgers vom Boden angehoben ist. Die Gewichtskraft des Heckträgers wird ausschließlich über die Befestigungseinrichtung und das Fahrzeug in den Boden eingeleitet. Der Heckträger ist im fahrzeuggebundenen Transportzustand nicht über das Rad auf dem Boden abgestützt. Dadurch kann ausgeschlossen werden, dass die Rolleinrichtung bzw. das Rad des Heckträgers beim Fahren des Fahrzeugs mit dem Boden in Kontakt tritt, was zu einer Beschädigung des Heckträgers führen könnte.

Vorzugsweise können zwei, drei, oder auch vier Räder vorgesehen sein, insbesondere Radpaare mit wenigstens zwei Rädern. Ist der Heckträger zum personengebundenen Transport in der Art einer Schubkarre ausgebildet, so kann ein Radpaar an einer beim personengebundenen Transport von dem Benutzer abgewandten Vorder- bzw. Radseite des Heckträgers angeordnet sein. Grundsätzlich kann der Heckträger an der Radseite in diesem Fall auch lediglich ein im Wesentlichen im Bereich der Mittellängsachse angeordnetes Laufrad aufweisen. Das Laufrad kann luftgefüllt sein und insbesondere bei sehr weichem Untergrund das Verfahren bzw. Rollen des Heckträgers vereinfachen. Von Vorteil ist dabei, wenn das Rad oder Radpaar beim personengebundenen Transport in Richtung der Mittellängsachse des Tragkörpers gegenüber dem Schwerpunkt des Tragkörpers nach außen in Richtung zu einer Außenseite des Tragkörpers verschoben ist oder an der Außenseite angeordnet ist. Ist lediglich ein Rad vorgesehen, ist dieses vorzugsweise im Bereich der Mittellängsachse des Tragkörpers angeordnet. Grundsätzlich kann ein Radträger auch derart vorgesehen sein, dass das Rad beim personengebundenen Transport außerhalb der Transportfläche liegt und gegenüber dem Tragkörper nach außen verlagert ist.

Auch ist es möglich, dass der Heckträger in der Art einer vierrädrigen Handkarre ausgebildet ist und jeweils ein Radpaar an der Radseite und an einer beim personengebundenen Transport dem Benutzer zugewandten Halte- bzw. Schubseite vorgesehen ist. Bei einer Mehrzahl von Rädern kann der Heckträger an mehreren unterschiedlichen Stellen beim personengebundenen Transport auf dem Boden abgestützt sein, was das Kippverhalten verbessert. Die Krafteinleitung in den Boden erfolgt dann über mehrere Räder, so dass die Räder bei einem weichen Boden nur wenig in den Boden einsinken können, was das Rollen des Heckträgers über den Boden erleichtert.

Alternativ oder ergänzend kann wenigstens eine Kufe oder ein Kufenpaar zum gleitenden Transport des Heckträgers vorgesehen sein. Vorzugsweise ist die konstruktive Ausgestaltung des nicht erfindungsgemäßen Heckträgers derart, dass bedarfsweise an dem Heckträger ein Rad oder eine Kufe befestigbar ist, je nach Untergrund, auf dem der Heckträger personengebunden transportiert werden soll. Kufen zum gleitenden Transport des Heckträgers sind dann von Vorteil, wenn der Untergrund schlammig, aufgeweicht und uneben ist. Insbesondere ermöglichen Kufen einen vereinfachten gleitenden Transport des Heckträgers auf verschneiten oder vereisten Untergründen. Bei einem festen, weitgehend ebenen Untergrund dagegen können Räder vorteilhaft zum personengebundenen Transport des Heckträgers eingesetzt werden.

Die nachfolgend für einen Heckträger mit wenigstens einem Rad zum rollenden Transport des Heckträgers beschriebenen Merkmale können entsprechend auch bei einem Heckträger verwirklicht sein, der wenigstens eine Kufe für den gleitenden Transport aufweist, auch wenn dies nachfolgend nicht ausdrücklich beschrieben ist.

Vorzugsweise sieht die Erfindung vor, dass das Rad über einen zur Lagerung des Rades ausgebildeten Radträger, der als Fahrgestell ausgebildet sein kann, mit dem Tragkörper verbunden ist. Durch eine geeignete konstruktive Ausgestaltung des Radträgers lässt sich die Position des Rades beim personengebundenen Transport vorgeben, wobei das Rad, wie oben beschrieben, beim personengebundenen Transport unterhalb des Tragkörpers oder auch seitlich neben dem Tragkörper angeordnet sein kann. Es versteht sich, dass der Radträger auch zur Lagerung mehrerer Räder ausgebildet sein kann, insbesondere zur Lagerung eines Radpaares.

Vor Vorteil hierbei ist, wenn sich das Rad, und, vorzugsweise, ein zur Lagerung des Rades ausgebildeter Radträger, als separates Bauteil bzw. separate Bauteile bedarfsweise mit dem Heckträger verbinden bzw. vom Heckträger abnehmen lassen. Dadurch ist es möglich, dass das Rad, vorzugsweise zusammen mit dem Radträger, bei der fahrzeuggebundenen Verwendung des Heckträgers getrennt vom Heckträger, beispielsweise im Innenraum des Fahrzeugs, stationiert wird. Damit lassen sich der Platzbedarf und das Gewicht des Heckträgers für den fahrzeuggebundenen Transport verringern. Zudem können unterschiedliche, an den jeweiligen Belastungsfall und/oder Untergrund angepasste Radtypen, wie Reifen aus Gummi, Kunststoff, Metall, gegebenenfalls mit einer dem Untergrund angepassten Profilierung, zusammen mit gleich oder unterschiedlich ausgebildeten Radträgern bedarfsweise für einen personengebundenen Transport eingesetzt werden. Unabhängig davon können Radträger unterschiedlicher Baugröße verwendet werden, wobei diese aus Metall oder Kunststoff bestehen können. Dabei kann der Radträger starr oder federnd mit federelastischen Eigenschaften ausgebildet sein.

Das Rad und, vorzugsweise, ein zur Lagerung des Rades ausgebildeter Radträger ist höhenverstellbar aus einer abgesenkten Stellung im personengebundenen Transportzustand in eine angehobene Stellung im fahrzeuggebundenen Transportzustand. Dadurch lässt sich ein ausreichender Bodenabstand des Rades beim Transport des Heckträgers mit dem Fahrzeug durch Höhenverstellung des Rades gewährleisten.

Der Radträger kann für eine Höhenverstellung des Rades schwenkbar an dem Tragkörper befestigt sein. Die Schwenkachse verläuft vorzugsweise parallel zu einer Längsachse des Transportfahrzeuges, bezogen auf den fahrzeuggebundenen Transportzustand des Heckträgers, wenn der Heckträger beispielsweise an einer Anhängerkupplung des Fahrzeuges angebracht ist. Das Rad bzw. der Radträger lässt sich dann mit Blick auf das Heck des Fahrzeugs vorzugsweise nach links oder nach rechts zur Seite hin auf- bzw. hochschwenken. Grundsätzlich ist es auch möglich, dass die Schwenkachse quer zur Fahrzeuglängsachse verläuft.

Vorzugsweise lässt sich der Radträger manuell aus einer bodennahen Position für den personengebundenen Transport des Heckträgers in eine vom Boden weiter beabstandete Position für den fahrzeuggebundenen Transport aufschwenken oder aufklappen. Hierzu ist eine gelenkige Lagerung an dem Tragkörper vorgesehen. Ein motorischer Antrieb kann vorgesehen sein. Die Höhenverstellung kann auch mittels einer Handkurbel und über eine Gewindespindel einer Höhenverstelleinrichtung erfolgen, so wie dies bei Stützrädern von Wohnwagen oder sonstigen Fahrzeuganhängern üblich ist. Eine Höhenverstelleinrichtung kann es in einfacher Weise zulassen, den Bodenabstand des Tragkörpers entsprechend auf die Montagehöhe am Fahrzeug einzustellen, was das Anbringen des Heckträgers am Fahrzeug vereinfacht. Wenn der Heckträger beispielsweise als Kupplungslader ausgebildet ist, lässt sich der Heckträger durch eine Höhenverstelleinrichtung im personengebundenen Transportzustand über die Kupplungsebene anheben und nach Positionierung der Befestigungseinrichtung über der Fahrzeugkupplung mittels der Höhenverstelleinrichtung absenken, so dass es zum Anbringen am Fahrzeug nicht notwendig ist, den Heckträger manuell anzuheben oder für eine Positionierung über der Kupplung zu bewegen.

Die Höhenverstellung kann in einfacher Weise auch über mehrere unterschiedlich weit vom Boden beabstandete zur Lagerung einer Radachse ausgebildete Bohrungen an dem Radträger erfolgen, so dass ein Rad durch das Versetzen der Radachse in eine entsprechende Bohrung höhenverstellbar ist. Die Höhenverstellung erfolgt hier durch Umsetzen der Radachse. Schließlich ist es möglich, dass der Radträger als solcher an verschiedenen Stellen des Tragkörpers an diesen anbringbar ist. Der Radträger kann auch in Bereichen teleskopierbar sein, um den Abstand der Radachse zum Boden zu verändern.

Vorzugsweise kann das Rad und, vorzugsweise, ein zur Lagerung des Rades ausgebildeter Radträger, in einer Stellung im personengebundenen Transportzustand und/oder im fahrzeuggebundenen Transportzustand arretierbar sein, wobei, vorzugsweise, das Rad und, weiter vorzugsweise der Radträger, in mehreren Stellungen oberhalb oder unterhalb der Transportfläche arretierbar ist. Dadurch lässt sich das Rad und, vorzugsweise, der Radträger, in mehreren Positionen mit unterschiedlichem Bodenabstand feststellen bzw. fixieren. Bei Transport ist damit eine feste Transporthöhe vorgegeben. Dies verhindert ein ungewolltes Verstellen des Rades und/oder des Radträgers. Zumindest lässt sich das Rad bzw. der Radträger bei Erreichen einer beim personengebundenen Transport erreichten Endstellung und einer weiteren Endstellung beim fahrzeuggebundenen Transport arretieren.

Zusätzlich können Möglichkeiten, zur Arretierung wischen den beiden Endstellungen vorgesehen sein, um unterschiedliche Bodenabstände vorzugeben.

Eine Radachse zum Lagern und Tragen des Rades kann im personengebundenen Transportzustand unterhalb einer die Transportfläche aufweisenden Transportebene und im fahrzeuggebundenen Transportzustand oberhalb der Transportebene angeordnet sein. Das Rad und, vorzugsweise, ein zur Lagerung des Rades ausgebildeter Radträger, können von einer Stellung unterhalb der Transportebene die Transportebene durchlaufend in eine Endstellung oberhalb der Transportebene schwenkbar sein. Im fahrzeuggebundenen Transportzustand befindet sich das Rad und gegebenenfalls der Radträger oberhalb der Transportebene, so dass eine ausreichende Bodenfreiheit gewährleistet ist.

In diesem Zusammenhang kann die Erfindung weiter vorsehen, dass das Rad und, vorzugsweise, zumindest Teile eines zur Lagerung des Rades ausgebildeten Radträgers, im personengebundenen Transportzustand zumindest bereichsweise unterhalb der Transportfläche, das heißt von der Transportfläche überdeckt, und/oder im fahrzeuggebundenen Transportzustand zumindest bereichsweise oberhalb der Transportfläche, das heißt die Transportfläche überdeckend, angeordnet ist. Im personengebundenen Transportzustand ist der Tragkörper über den Radträger und das Rad auf dem Boden abgestützt. Im fahrzeuggebundenen Transportzustand lässt sich das Rad und, vorzugsweise, der Radträger, zur Fixierung der auf der Transportfläche abgelegten Last nutzen. Hierbei können das Rad und der Radträger die sich auf dem Heckträger befindliche Last festklemmen, was einen sicheren Transport gewährleistet. Somit erfüllen das Rad und der Radträger zusätzlich eine Ladungssicherungsfunktion. Dadurch, dass das Rad und der Radträger in beiden Transportzuständen nicht seitlich über den Tragkörper übersteht, wird ein geringer Platzbedarf des erfindungsgemäßen Heckträgers erreicht.
Um eine sichere Lagerung der Last auf dem Heckträger zu erreichen, kann der Tragkörper einen Aufnahmeraum zur Aufnahme der Last aufweisen, wobei eine Radachse zum Lagern und Tragen des Rades und, vorzugsweise, das Rad und/oder der Radträger, im fahrzeuggebundenen Transportzustand nicht in den Aufnahmeraum eingreifen, dass heißt außerhalb des Aufnahmeraums angeordnet ist. Dadurch wird der zum Transport der Last zur Verfügung stehende Bereich des Heckträgers nicht durch das Rad bzw. den Radträger eingeschränkt. Der Aufnahmeraum wird vorzugsweise gebildet durch eine Wanne oder einen Korb und seitlich durch die Seitenwände der Wanne oder des Korbes begrenzt. Der Boden der Wanne oder des Korbes bildet dann die eigentliche Transportfläche im Sinne der Erfindung, deren Größe durch die umhüllende Konturlinie der Wanne oder des Korbes festgelegt ist und die in der Transportebene liegt. Um eine platzsparende Anordnung des Heckträgers zu erreichen und gegebenenfalls eine Lastsicherungsfunktion erfüllen zu können, kann bei einer anderen Ausführungsform der Erfindung auch vorgesehen sein, dass das Rad und, vorzugsweise, der Radträger, im fahrzeuggebundenen Transportzustand auch in den Aufnahmeraum eingreifen.

Vorzugsweise kann die Radachse zumindest im personengebundenen Transportzustand, vorzugsweise in beiden Transportzuständen, gegenüber der Mitte der Transportfläche und/oder dem Schwerpunkt des Tragkörpers nach außen in Richtung zu einer ersten Außenseite des Tragkörpers versetzt angeordnet sein, wobei diese Außenseite dann eine Radseite des Heckträgers bildet. Die versetzte Anordnung der Radachse lässt es zu, wie beim Schubkarrenprinzip, die Last überwiegend über dem Rad zu lagern, um den Benutzer zu entlasten. Die Radseite des Heckträgers befindet sich weiter vorzugsweise mit Blick auf das Heck des Zugfahrzeuges links oder rechts von der Mittellängsachse des Fahrzeugs. Insbesondere ist als Radseite eine Querseite des Tragkörpers ausgewählt.

Alternativ oder ergänzend kann das Rad bzw. die Radachse im personengebundenen Transportzustand insbesondere bei lediglich einem Rad auch zentral, jedenfalls im Bereich einer mittleren Achse des Tragkörpers, unter der Transportfläche angeordnet sein, ähnlich dem prinzipiellen Aufbau der chinesischen Schubkarre.

Alternativ kann grundsätzlich auch vorgesehen sein, dass Räder an gegenüberliegenden (Quer-)Seiten des Heckträgers angeordnet sind, so dass der Heckträger die Funktion einer Geländekarre bzw. die Funktion eines geschobenen Vierradfahrzeugs übernehmen kann. Solch eine Funktion ist insbesondere von Vorteil bei sehr schweren Lasten.

Vorzugsweise ist wenigstens ein Radpaar vorgesehen, wobei ein Radpaar wenigstens zwei Räder aufweist und wobei, weiter vorzugsweise, die Räder eines Radpaares auf einer gemeinsamen Radachse gelagert sind. Dadurch wird die Gewichtskraft des Tragkörpers und der Last beim personengebundenen Transport auf mehrere Räder verteilt und damit die Belastung jedes einzelnen Rades verringert.

Um den Heckträger einseitig Anheben und Absenken zu können und dadurch den Befestigungsvorgang an dem Fahrzeug zu vereinfachen, kann wenigstens ein an einer ersten Außenseite des Heckträgers angeordnetes Rad gegenüber wenigstens einem an einer gegenüberliegenden Außenseite des Heckträgers vorgesehenen weiteren Rad höhenverstellbar gelagert sein. Dies ist insbesondere dann von Vorteil, wenn der Heckträger eine Befestigungsvorrichtung mit einem Kupplungselement aufweist, wobei das Kupplungselement mit einer fahrzeugseitigen Anhängezugvorrichtung bzw. Anhängerkupplung zu verbinden ist. Das Prinzip des einseitigen Anhebens und Absenkens ist bekannt beispielsweise bei Anhängern, die mittels eines Stützrades im Bereich einer Anhängerdeichsel gegenüber wenigstens einem Fahr- bzw. Laufradpaar anhebbar bzw. absenkbar sind. Höhenverstellbare und nicht-höhenverstellbare Räder können gemeinsam zum Verfahren des Heckträgers im personengebundenen Transportzustand dienen. Es können auch alle Räder höhenverstellbar gelagert sein. Bei einer Höhenverstellbarkeit aller am Heckträger vorgesehenen Räder kann der Heckträger zum waagerechten Anheben oder Absenken einer Last ähnlich einem Hubwagen betrieben werden, was insbesondere bei schweren Lasten von Vorteil ist.

Um eine sichere Lagerung der Last im vom Fahrzeug entkoppelten Zustand des Heckträgers sicherzustellen, kann zusätzlich zu dem Rad wenigstens ein mit dem Tragkörper verbundenes Abstützelement vorgesehen sein, wobei das Abstützelement in einem vom Fahrzeug getrennten abgestützten Zustand des Heckträgers auf einem Untergrund aufstellbar und der Tragkörper über das Abstützelement abstützbar ist. Zum Abstützen des Heckträgers kann das Abstützelement klappbar, schwenkbar oder teleskopierbar ausgebildet und/oder mit dem Tragkörper klappbar, schwenkbar oder teleskopierbar verbunden sein. Die Verbindung zwischen dem Abstützelement und dem Tragkörper kann lösbar oder unlösbar ausgebildet sein. Bei einer lösbaren Verbindung kann das Abstützelement bedarfsweise durch einen Benutzer an den Tragkörper montiert werden, so dass ein einfaches Nachrüsten möglich ist. Eine lösbare Verbindung kann durch Stecken des Abstützelementes auf bzw. an den Tragkörper erfolgen.

Als Abstützelement kann neben dem (Lauf-)Rad wenigstens ein höhenverstellbares Stützrad vorgesehen sein. Solches ist in der DE 20 2006 018 785 U1 beschrieben. Beispielsweise kann das Stützrad mit einer Handkurbel bzw. Spindel höhenverstellbar ausgeführt sein. Solch ein Stützrad bzw. Hilfsrad sichert den Heckträger zusätzlich gegen ein Umfallen. Vorzugsweise kann das Stützrad weiter ein Absatteln des Heckträger von einem Fahrzeug unterstützen. Dabei Übernimmt das Stützrad nicht nur eine Stütz- sondern gleichermaßen eine Rangierfunktion, wozu das Stützrad quer zur Lagerachse drehbar angeordnet sein kann. Insbesondere können das Stützrad einerseits und das Laufrad andererseits unterschiedlich ausgebildet sein.

Zum erleichterten Anheben, Bewegen und Absenken des Heckträgers kann wenigstens eine Halte- bzw. Schubstange vorgesehen sein. Die Haltestange und wenigstens ein Rad des Heckträgers können auf gegenüberliegenden Außenseiten des Tragkörpers angeordnet sein. Vorzugsweise sind wie bei einer üblichen Schubkarre zwei Haltestangen vorgesehen, die an ihren Enden einen abgewinkelten Griffabschnitt aufweisen können. Für eine höhere Stabilität können die Haltestangen durch wenigstens eine Querstrebe miteinander verbunden sein. Die Haltestange kann auch als Abstützelement dienen und eine entsprechende mehrfach gebogene Form aufweisen, die das Abstützen des Tragkörpers im personengebundenen Zustand zulässt.

Alternativ oder ergänzend kann auch eine Griffmulde oder dergleichen am Tragkörper vorgesehen sein, an der ein Benutzer den Heckträger erfassen und verschieben kann. Eine Haltestange ist dann nicht zwingend vorgesehen.

Vorzugsweise ist die Haltestange als separates Bauteil bedarfsweise mit dem Heckträger form- und/oder kraftschlüssig verbindbar bzw. an dem Heckträger anbringbar und vom Heckträger abnehmbar. Beispielsweise kann eine Schraub- oder Steckverbindung vorgesehen sein. Der Tragkörper des erfindungsgemäßen Heckträgers kann Hohlprofile aufweisen bzw. aus solchen gebildet sein, wobei die Haltestangen für den personengebundenen Transport in die Hohlprofile einsteckbar sind. Sicherungsmittel können vorgesehen sein, um ein unkontrolliertes Lösen der Haltestangen vom Tragkörper zu verhindern. Die Haltestangen können teleskopierbar oder durch Zusatzstücke verlängerbar sein.

Das Abnehmen der Haltestange(n) vom Heckträger ist von Vorteil, da die Haltestange(n) für den fahrzeuggebundenen Transport der Ladung als separate Bauteile beispielsweise im Fahrzeuginnenraum verstaut werden können, was ein Überstehen der Haltestangen über den Tragkörper beim Verfahren mit dem Fahrzeug verhindert. Alternativ können die Haltestangen auch an dem Heckträger stoffschlüssig angebracht sein, beispielsweise über Schweißverbindungen. Alternativ oder ergänzend zur Haltestange kann Grundsätzlich auch ein Schleppseil zum Bewegen des Heckträgers bei dem personengebundenen Transport vorgesehen sein.

Zum Laden von schweren Lasten kann das Rad derart höhenverstellbar bzw. schwenkbar gelagert sein, dass der Heckträger bzw. der Tragkörper nach der Höhenverstellung des Rades in eine angehobene Stellung unmittelbar auf einem Untergrund aufliegen kann, was das Beladen des Tragkörpers mit schweren auf dem Untergrund liegenden Lasten vereinfacht. Die Haltegriffe bzw. Haltestangen können in diesem Zusammenhang von einer dem Rad bzw. Radträger gegenüberliegenden Seite des Tragkörpers abnehmbar und über eine entsprechende Schraub- oder Steckverbindung an der Radseite des Tragkörpers befestigbar sein. Mit den Haltestangen lässt sich dann der Tragkörper auf der Radseite in einfacher Weise anheben, so dass das Rad in einfacher Weise aus einer angehobenen Stellung in eine abgesenkte Stellung für den personengebundenen Transport des Heckträgers gebracht werden kann. Die Haitestangen ermöglichen hierbei aufgrund der Hebelwirkung ein einfaches Anheben des Heckträgers auch bei schweren Lasten zur Überführung des Rades in eine Stellung unterhalb der Transportebene.

Vorzugsweise ist die Haltestange aus einer abgesenkten Stellung im fahrzeuggebundenen Transportzustand in eine angehobene Stellung im personengebundenen Transportzustand höhenverstellbar ausgebildet bzw. an dem Tragkörper befestigt. Damit kann beim fahrzeuggebundenen Transport der Last ein ausreichender Bodenabstand des Heckträgers leicht sichergestellt werden. Weiter vorzugsweise ist auch die Haltestange schwenkbar oder klappbar an dem Tragkörper befestigt. Dabei kann die Haltestange über ein Schwenklager mit dem Heckträger verbunden sein, wobei die Schwenkachse vorzugsweise parallel zu einer Fahrzeuglängsachse und/oder parallel zur Radachse des Rades angeordnet ist.

Weist der Tragkörper einen Aufnahmeraum zur Aufnahme der Last auf, kann die Haltestange in einer abgesenkten Stellung im fahrzeuggebundenen Transportzustand ausgehend von einem am Heckträger befestigten Ende zumindest bereichsweise in den Aufnahmeraum eintauchen und dann, vorzugsweise, auf der Transportfläche aufliegen. Hierdurch ist eine zusätzliche Lastsicherung möglich. Durch Befestigung der Haltestange an dem Tragkörper im Bereich der Außenränder des Tragkörpers wird der Aufnahmeraum für die Last möglichst wenig eingeschränkt.

Ist die Haltestange über ein Schwenkgelenk an dem Tragkörper befestigt, kann das Gelenk möglichst außerhalb des Aufnahmeraums angeordnet sein, was das Einschwenken der Haltestange in den Aufnahmeraum zum Erreichen einer ersten Endstellung und das Aufschwenken aus dem Aufnahmeraum zum Erreichen einer zweiten Endstellung bei einem großen Schwenkwinkel zwischen den beiden Endstellungen zulässt. In diesem Zusammenhang kann bei einer vorteilhaften Ausführungsform der Erfindung vorgesehen sein, dass die Haltestange um eine oberhalb des Aufnahmeraums angeordnete Schwenkachse verschwenkbar ist. Die Haltestange kann sich dabei im fahrzeuggebundenen Transportzustand ausgehend von dem Schwenkgelenk schräg nach unten in den Aufnahmeraum hinein erstrecken.

Um eine geringe Baugröße des Heckträgers im fahrzeuggebundenen Transportzustand zu erreichen, kann die Haltestange im fahrzeuggebundenen Transportzustand zumindest im wesentlichen oberhalb der Transportfläche, dass heißt die Transportfläche bereichsweise überdeckend, angeordnet sein. Um eine leichte Verschiebbarkeit bzw. Verfahrbarkeit des Heckträgers beim personengebundenen Transport durch eine ausreichende Hebelwirkung sicherzustellen, erstreckt sich die Haltestange beim personengebundenen Transport dagegen über den Trägergrundkörper hinaus und steht über den Trägergrundkörper über.

Um eine sichere Handhabung des Heckträgers beim personengebundenen Transport und auch beim Transport mit dem Fahrzeug zu gewährleisten, kann die Haltestange in wenigstens einer Endstellung beim personengebundenen Transport und/oder in wenigstens einer Endstellung beim fahrzeuggebundenen Transport arretierbar bzw. feststellbar sein, wobei, grundsätzlich, die Haltestange in mehreren Höhenstellungen arretierbar sein kann. Dadurch lässt sich eine Endstellung mit bestimmter Höhe der Haltestange in Abhängigkeit von der Benutzergröße auswählen, was zu einem hohen Benutzerkomfort bei Verwendung des erfindungsgemäßen Heckträgers beiträgt.

Vorzugsweise sind zwei Haltestangen auf einer gleichen Außenseite des Tragkörpers an dem Tragkörper befestigt. Hierdurch wird die Handhabung des Heckträgers weiter vereinfacht. Die lichte Weite zwischen zwei auf einer gleichen Außenseite des Heckträgers angeordneten Haltestangen kann bezogen auf den fahrzeuggebundenen Transportzustand von einer Befestigungsseite der Haltestangen an dem Tragkörper in Richtung zu einer gegenüberliegenden Außenseite des Tragkörpers zumindest abschnittsweise abnehmen. Die beiden Haltestangen nähern sich also ausgehend von den befestigten Enden der Haltestangen über die Transportfläche einander an. Die Haltestangen können dann in einfacher Weise eine Lastsicherungsfunktion erfüllen, wenn es möglich ist, die Last für den fahrzeuggebundenen Transport zwischen dem Trägerkörper und den Haltestangen festklemmen.

Zur Aufnahme der Last kann der Tragkörper eine Wanne oder einen Gitterkorb oder ein Netz aufweisen. Hier kann der Tragkörper einen Rahmen aufweisen, vorzugsweise gebildet aus Längs- und Querprofilen, in den eine Wanne oder ein Gitterkorb oder ein Netz eingehängt werden kann oder an dem eine Wanne oder ein Gitterkorb oder ein Netz befestigt werden kann. Rahmen und Wanne oder Rahmen und Gitterkorb können miteinander unlösbar, das heißt im Sinne der Erfindung nicht zerstörungsfrei, verbunden und/oder einstückig ausgebildet sein. Grundsätzlich ist es so, dass der Aufnahmeraum zumindest seitlich und nach unten durch eine Wanne oder einen Gitterkorb begrenzt ist.

Zusätzlich kann ein Deckel zum Verschließen des Aufnahmeraums vorgesehen sein. Alternativ kann eine Abdeckplane, beispielsweise eine Haube mit Gummizügen, zur Abdeckung des Aufnahmeraums verwendet werden. Sowohl der Deckel als auch die Abdeckplane können als separate Bauteile nach einem Abnehmen vom Heckträger beispielsweise im Innenraum des Fahrzeugs verstaut werden. Der Deckel oder die Abdeckplane bilden einen Blick- und Wetterschutz.

Zur Vergrößerung des Aufnahmeraums können auf bzw. an dem Tragkörper bzw. einer Wanne oder einem Korb Seitenwände oder Seitengitter als separate Bauteile anbringbar sein. Dabei können die Seitenwände bzw. die Seitengitter, welche die Seitenhöhe der Wanne oder des Gitterkorbs zusätzlich erhöhen können, bedarfsweise aufsetzbar, aufsteckbar oder aufklappbar ausgebildet sein. Alternativ kann statt der Wanne oder des Gitterkorbs auch eine ebene (Loch-)Platte oder ein ebenes Gitter vorgesehen sein, auf der bzw. dem die Last abgelegt wird.

Für einen erleichterten personengebundenen Transport kann wenigstens eine Antriebseinrichtung für einen motorischen Antrieb wenigstens eines Rades vorgesehen sein. Vorzugsweise ist als motorischer Antrieb ein batteriebetriebener Elektromotor vorgesehen, wobei grundsätzlich auch andere motorische Antriebe eingesetzt werden können.

Wie oben bereits beschrieben, kann die Befestigungseinrichtung mit einer fahrzeugseitigen Anhängezugvorrichtung bzw. Anhängerkupplung verbindbar sein, insbesondere durch Aufsetzen eines Kupplungselementes der Befestigungseinrichtung auf eine Kupplungskugel einer Kugelkopfanhängezugvorrichtung des Fahrzeugs. Dies bietet den Vorteil, dass der Heckträger an jedem beliebigen Fahrzeug, sofern dieses eine Anhängekupplung besitzt, angebracht werden kann. Vorzugsweise bildet die Befestigungseinrichtung mit der fahrzeugseitigen Anhängezugvorrichtung eine Schnellkupplung, die sehr einfach zu schließen und zu öffnen ist. Dabei kann die Befestigungsvorrichtung ein Kugelgehäuse aufweisen, das im Kupplungszustand einen Kugelkopf der Anhängerkupplung zumindest teilweise umschließt. Des Weiteren kann die Befestigungsvorrichtung einen Klemmmechanismus aufweisen, mit dem der Kugelkopf verklemmbar ist. Die Befestigungseinrichtung ermöglicht es vorteilhaft, dass der Heckträger auch bei schweren Lasten stets sicher am Fahrzeug gehalten ist. Insbesondere soll eine Verdrehung zwischen der Befestigungseinrichtung und dem Kugelkopf der Anhängerkupplung ausgeschlossen sein. Befestigungseinrichtungen der beschriebenen Art sind beispielsweise aus der DE 10 2007 026 375 B3 oder der AT 404 455 B bekannt.

Ist ein Radträger mit zwei Rädern zum Bewegen des Heckträgers im personengebundenen Transportzustand vorgesehen, kann der Radträger zwei mit einer Radachse eines Radpaares verbundene Schwenkbügel aufweisen, wobei die Schwenkbügel schwenkbar an dem Tragkörper befestigt sind und wobei die Haltestangen im fahrzeuggebundenen Transportzustand zwischen den Rädern des Radpaares und den Schwenkbügeln angeordnet sind. Damit wird ein sehr platzsparender Aufbau des Heckträgers beim Transport mit dem Fahrzeug erreicht.

Eine bevorzugte erfindungsgemäße Verwendung sieht vor, den oben beschriebenen Heckträger als Wildbretträger für erlegtes Wild oder Kirrgut einzusetzen. Die Verwendung des Heckträgers als Transporteinrichtung für erlegtes Wild oder Kirrgut stellt für den Jäger eine große Arbeitserleichterung dar. Tätigkeiten, wie z. B. das Bergen und Verladen von erlegtem Wild aus schwer zugänglichem Gelände, ist für eine Person unter Verwendung des erfindungsgemäßen Heckträgers vereinfacht und mit verringertem Kraftaufwand möglich. Die Last bzw. das erlegte Wild wird bei einem personengebundenen Transport im Gelände über den Heckträger und das Rad getragen, so dass der Benutzer lediglich den Kraftaufwand zum Verfahren des Heckträgers aufbringen muss. Darüber hinaus kann erlegtes Wild nun unter Verwendung des Heckträgers direkt am Bergungsort aufgenommen werden. Nach Aufnahme bzw. Verladen des erlegten Wilds auf den Heckträger, z. B. durch einfaches Hinaufziehen des erlegten Wilds auf den vorzugsweise abgesenkten Heckträger, kann der Heckträger vom Bergungsort auf einfache Weise zum Fahrzeug verfahren werden. Anschließend wird der Heckträger vorzugsweise zusammen mit dem erlegten Wild angehoben und mit der Befestigungseinrichtung beispielsweise auf die Fahrzeugkupplung aufgesetzt und an der Fahrzeugkupplung festgesetzt. Eine kraftaufwendige Beladung des am Fahrzeug befestigten Heckträgers entfällt.

Am Zielort kann dann der Abtransport des Wildes vom Fahrzeug ebenfalls zusammen mit dem Heckträger erfolgen, so dass auch hier ein Umbetten des Wildes entfällt. Damit bleibt das Wild sauber und die Wildbretqualität wird verbessert. Darüber hinaus ermöglicht der Heckträger die Bergung und das Verladen und auch einen anschließenden Transport auch von sehr schwerem Wild mit lediglich einem Transportmittel, nämlich dem Heckträger, und, vorzugsweise, durch lediglich eine Person. Des Weiteren erübrigt sich mit der Verwendung des Heckträgers die Anschaffung eines teuren geländegängigen Fahrzeugs, weil der Benutzer mit seinem Fahrzeug auf einem befestigten Weg stehen bleiben kann, wobei ein unbefestigter Weg zum Einsatzort mit dem Heckträger zurückgelegt werden kann.

Eine weitere erfindungsgemäße Verwendung sieht vor, den Heckträger als Schubkarre einzusetzen. Der Heckträger kann hierbei die Abmessungen und/oder Gestalt typischer Schubkarren aufweisen. Letztlich kann die Erfindung hier eine übliche Schubkarre betreffen, die eine Befestigungseinrichtung zum lösbaren Anbringt gen an dem Fahrzeug aufweist, um die Schubkarre von außen am Fahrzeug zu halten und mit dem Fahrzeug zu transportieren. Eine Verwendung des Heckträgers als Schubkarre bietet den Vorteil, dass abzutransportierende Lasten, wie Gartenabfälle oder Baumabfälle oder Bauschutt, direkt am Bergungsort auf den Heckträger verladen und anschließend mit dem Fahrzeug, nach Anbringung des Heckträgers am Fahrzeug, zu einem Abladeplatz bzw. Weiterverarbeitungsort gefahren werden können. Dabei entfallen jegliche Umladevorgänge zwischen der Bergung der zu transportierenden Last und dem Abtransport der Last zu einem endgültigen Bestimmungsort.

Eine dritte erfindungsgemäße Verwendung sieht vor, den Heckträger als Einkaufswagen zu verwenden. Hier bietet der Heckträger als Einkaufswagen den Vorteil, dass sich gekaufte beliebige Waren noch in, den Warenverkaufsräumen in den Heckträger einräumen lassen und mit diesem zum Fahrzeug transportiert werden können. Der Heckträger kann hierbei die Abmessungen und/oder Gestalt typischer Einkaufswagen aufweisen. Letztlich kann die Erfindung hier einen üblichen Einkaufswagen betreffen, der eine Befestigungseinrichtung zum lösbaren Anbringen an dem Fahrzeug aufweist, um den Einkaufswagen von außen am Fahrzeug zu halten und mit dem Fahrzeug zu transportieren. Am Fahrzeug angekommen, können die eingekauften Transportgüter im Einkaufswagen verbleiben und außenseitig, nach Befestigung am Fahrzeug, mit dem Fahrzeug transportiert werden. Nach Erreichen des Zielorts des Fahrzeugs, kann der Einkaufswagen nach einem Abnehmen vom Fahrzeug direkt, beispielsweise bis in einen Raum eines Hauses gefahren werden, ohne dass vorher ein Umladen der eingekauften Güter notwendig ist. Dies ist insbesondere bei einem ebenerdigen Eingang von großem Vorteil und stellt eine erhebliche Erleichterung im täglichen Leben für Personen jeglichen Alters dar.

Eine vierte erfindungsgemäße Verwendung kann schließlich vorsehen, den Heckträger als Kinderwagen zu verwenden. Der Heckträger kann hierbei die Abmessungen und/oder Gestalt typischer Kinderwagen aufweisen. Letztlich kann die Erfindung hier einen üblichen Kinderwagen betreffen, der eine Befestigungseinrichtung zum lösbaren Anbringen an dem Fahrzeug aufweist, um den Kinderwagen von außen am Fahrzeug zu halten und mit dem Fahrzeug zu transportieren. Dabei bietet der Heckträger als Kinderwagen den Vorteil, dass ein umständliches und sogar häufig nicht mögliches Verstauen eines Kinderwagens in einem Fahrzeuginnenraum entfällt. Darüber hinaus kann zum Transport auch eines größeren Kinderwagens ein kleineres Fahrzeug, sofern es über eine Anhängekupplung verfügt, verwendet werden.

Insbesondere bei Ausbildung des Heckträgers als Einkaufswagen oder als Kinderwagen kann der Heckträger auf wenigstens einer Radseite zwei Dreikranzräder aufweisen, die auf einer gleichen Radseite des Heckträgers gegenüberliegend angeordnet sind und eine Treppensteigeinrichtung bilden. Die beiden Dreikranzräder sind um eine gemeinsame Achse drehbar und weisen jeweils drei Räder auf, die einerseits um die jeweils eigene Radachse und andererseits um die gemeinsame Achse drehbar sind Dadurch lassen sich Treppenstufen leicht überwinden.

Weiterhin bietet die Verwendung des Heckträgers als Einkaufswagen oder Kinderwagen den Vorteil, dass selbst kleinere Fahrzeuge mit geringer Bauhöhe, wie beispielsweise Sportwagen oder Coupes, sofern diese über eine Anhängerkupplung verfügen, einen Einkaufswagen oder Kinderwagen transportieren können.

Der erfindungsgemäße Heckträger lässt sich grundsätzlich zum Transport von beliebigen Lasten einsetzen. Beispielsweise lässt sich der Heckträger auch als Transportplattform bzw. Aufbaubasis für ein Stromaggregat oder dergleichen nutzen, wobei das Aggregat vorzugsweise fest mit dem Tragkörper verbunden, insbesondere verschraubt, sein kann. Auch andere Aufbauten sind möglich, beispielsweise können Pumpen, Schlauch-, Draht- und Kabelrollen oder dergleichen auf dem Tragkörper befestigt werden. Der fahrzeuggebundene Transport des Heckträgers mit dem Fahrzeug zu einem Zielort des Fahrzeugs und der anschließend personengebundene Transport des Heckträgers nach dem Abnehmen des Heckträgers vom Fahrzeug erleichtern hier insbesondere den Transport schwerer Lasten bei Arbeiten im Bau-, Landschafts- und Gartenbereich.

Insgesamt kann der Heckträger aus Metall, vorzugsweise Edelstahl oder verzinkter Stahl, und/oder aus Kunststoff bestehen. Es können jedoch auch Bauteile, wie beispielsweise der Tragkörper, aus Metall und andere, wie beispielsweise der Radträ-. ger und die Haltestange(n), aus Kunststoff bestehen oder eine Kunststoffummantelung bzw. Kunststoffbeschichtung aufweisen.

Im Einzelnen gibt es eine Vielzahl von Möglichkeiten, den erfindungsgemäßen Heckträger auszugestalten und weiterzubilden, wobei einerseits auf die abhängigen Patentansprüche und andererseits auf die nachfolgende detaillierte Beschreibung bevorzugter Ausführungsbeispiele der Erfindung unter Bezugnahme auf die Zeichnung verwiesen wird. Die Erfindung lässt es bedarfsweise zu, die oben und/oder die in den Patentansprüchen genannten und/oder anhand der Zeichnung offenbarten Merkmale miteinander zu kombinieren, auch wenn dies nicht im Einzelnen beschrieben ist. Die Erfindung ist nicht auf die dargestellten und beschriebenen Ausführungsformen beschränkt.

In der Zeichnung zeigen
- Fig. 1: eine perspektivische Ansicht einer Ausführungsform eines erfindungsgemäßen Heckträgers schräg von oben,
- Fig. 2: der in Fig. 1 dargestellte Heckträger in einer perspektivischen Ansicht schräg von oben, wobei Räder, Radträger und Haltestangen im eingeschwenkten fahrzeuggebundenen Transportzustand dargestellt sind,
- Fig. 3: eine Teilansicht des in Fig. 2 dargestellten Heckträgers, die die Befestigung der Haltestangen zeigt, wobei die Haltestangen im eingeschwenkten fahrzeuggebundenen Transportzustand dargestellt sind,
- Fig. 4: eine Seitenansicht des in Fig. 3 dargestellten Heckträgers, wobei die Haltestangen im aufgeschwenkten personengebundenen Transportzustand dargestellt sind,
- Fig. 5: ein Teilansicht einer Haltestange des in Fig. 1 dargestellten Heckträgers, wobei die Haltestange ein Befestigungsgelenk zur gelenkigen Befestigung an einem Tragkörper des Heckträgers aufweist und wobei das Befestigungsgelenk in einem geschlossenen Zustand gezeigt ist,
- Fig. 6: eine schematische Draufsicht auf den Radträger und die beiden Räder des in Fig. 1 dargestellten Heckträgers im personengebundenen Transportzustand des Heckträgers,
- Fig. 7: eine schematische Draufsicht auf einen Radträger und ein Rad einer zweiten Ausführungsform eines erfindungsgemäßen Heckträgers im personengebundenen Transportzustand des Heckträgers,
- Fig. 8: eine Draufsicht auf eine Befestigungseinrichtung eines erfindungsgemäßen Heckträgers, wobei der Heckträger an eine Fahrzeugkupplung angebracht ist,
- Fig. 9a, 9b: Seitenansichten einer dritten Ausführungsform eines erfindungsgemäßen Heckträgers im fahrzeuggebundenen Transportzustand (Fig. 9a) und im personengebundenen Transportzustand des Heckträgers (Fig. 9b),
- Fig. 10a, 10b: Seitenansichten einer vierten Ausführungsform eines erfindungsgemäßen Heckträgers im fahrzeuggebundenen Transportzustand (Fig. 10a) und im personengebundenen Transportzustand des Heckträgers, (Fig. 10b),
- Fig. 11: eine Ansicht des in Fig. 10b dargestellten Heckträgers von unten,
- Fig. 12: eine Seitenansicht einer fünften Ausführungsform eines erfindungsgemäßen Heckträgers in einem abgestützten stationären Ruhezustand,
- Fig. 13: eine Seitenansicht einer sechsten Ausführungsform eines als Einkaufswagen ausgebildeten Heckträgers,
- Fig. 14: eine Seitenansicht einer siebten Ausführungsform eines erfindungsgemäßen Heckträgers im personengebundenen Transportzustand des Heckträgers und
- Fig. 15: eine Seitenansicht einer achten Ausführungsform eines erfindungsgemäßen Heckträgers im personengebundenen Transportzustand des Heckträgers.

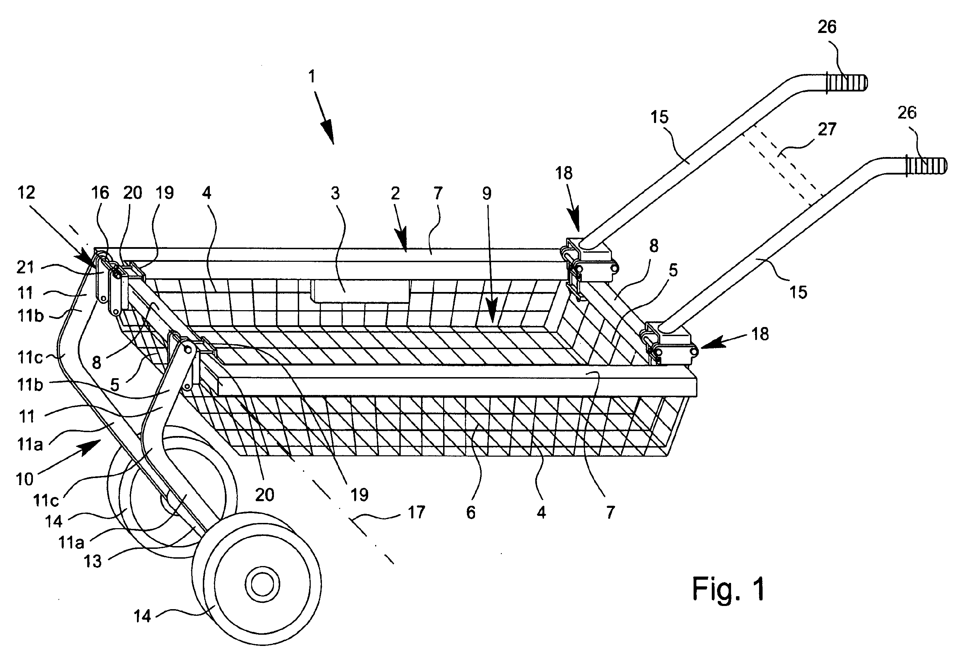

Fig. 1 zeigt in einer perspektivischen Ansicht einen Heckträger 1 in einer personengebundenen Transportstellung, wobei der Heckträger 1 einen Tragkörper 2 mit einer Befestigungseinrichtung 3 aufweist. Vorzugsweise ist der Tragkörper 2 ein Gitterkorb, eine Wanne oder eine eben ausgebildete (Loch-)Platte zur Aufnahme einer Last. Gemäß Fig. 1 weist der Tragkörper 2 einen Gitterkorb auf, wobei das Gitter eine Anordnung länglicher Drahtkörper oder Streben aus Metall oder Kunststoff ist. Vorzugsweise besteht der Gitterkorb aus einem Edelstahl, damit bei einem Einsatz des Heckträgers in Außenbereichen Korrosionserscheinungen vermieden werden können.

Der Gitterkorb weist auf zwei gegenüberliegenden Längsseiten Seitenwände 4 und auf zwei gegenüberliegenden Querseiten mit den Seitenwänden 4 verbundene querseitig orientierte Seitenwände 5 auf. Der als Tragkörper 2 ausgebildete Gitterkorb wird. unterseitig durch einen mit den Seitenwände 4, 5 verbundenen (Gitter-)Boden 6 begrenzt. Der Boden 6 bildet eine Transportfläche des Heckträgers 1.

Die Seitenwände 4, 5 sind an Längsrahmenträgem 7 und Querrahmenträgern 8 befestigt bzw. mit diesen verbunden. Vorzugsweise sind die Längsrahmenträger 7 und die Querrahmenträger 8 mit den Seitenwänden 4, 5 verschweißt oder verklebt. Daraus resultiert ein stabiler Aufbau des Tragkörpers 2. Bei einer alternativen Ausführungsform können die Längsrahmenträger 7 und die Querrahmenträger 8 auch lösbar mit den Seitenwänden 4, 5 verbunden sein, beispielsweise durch eine Steck- oder Klemmverbindung. Vorzugsweise können die Längsrahmenträger 7 und die Querrahmenträger 8 als Hohlprofile ausgebildet sein, so dass der Heckträger 1 ein geringes Eigengewicht aufweist Der Tragkörper 2 kann feuerverzinkt sein, so dass eine korrosionsbeständige Oberfläche erzielt wird.

Vorzugsweise weisen die Seitenwände 4, 5 und der Boden 6 eine Gittermaschenweite von wenigstens 30 x 30 mm, maximal von 70 x 70 mm, bevorzugt von 50 x 50 mm, auf. Längsseitig kann der Tragkörper 2 eine Länge zwischen 800 und 1000 mm, bevorzugt 1000 mm, aufweisen. Querseitig kann der Tragkörper 2 eine Breite zwischen 400 und 600 mm, insbesondere 500 mm, aufweisen. Der Abstand zwischen dem Boden 6 und der Oberseite der Längs- bzw. Querrahmenträger 7, 8 beträgt zwischen 100 und 200 mm, vorzugsweise zwischen 125 und 175 mm, besonders bevorzugt 150 mm. Insgesamt ergibt sich damit ein Aufnahmeraum 9, der eine Vielzahl von unterschiedlichen Transportgütern aufnehmen kann. Der Heckträger 1 weist vorzugsweise ein Gewicht zwischen 8 und 18 kg, besonders bevorzugt etwa 13 kg, auf. Insgesamt weisen die Gitterschweißpunkte der Seitenwände 4, 5 und des Bodens 6 eine Zugfestigkeit zwischen 300 und 800 kg, insbesondere 500 kg, auf. Damit ergibt sich eine zulässige Traglast für eine Vielzahl von Lasten, wobei die zulässige Traglast zwischen 70 und 130 kg, besonders bevorzugt 100 kg, betragen kann. Es versteht sich, dass die vorgenannten Maße nicht zwingend vorgesehen sein müssen. Auch kann der Tragkörper 2 nicht-gitterförmige und nichtunterbrochene Seitenwände 4, 5 und einen entsprechenden Boden 6 aufweisen.

An einer Querseite bzw. der Radseite des Heckträgers 1 ist ein Radträger 10 vorgesehen, der zwei Schwenkbügel 11 aufweist, die über Halteeinrichtungen 12 an einem Querrahmenträger 8 schwenkbar befestigt sind. Über eine gemeinsame Radachse 13 sind zwei Räder 14 an den Schwenkbügeln 11 gelagert. Mit den beiden Rädern 14 lässt sich der Heckträger 1 nach dem Trennen der Verbindung mit dem Fahrzeug in einfacher Weise von einem Benutzer schieben bzw. verfahren um beispielsweise an einem Bergungsort eine Last direkt auf den Heckträger 1 zu laden und die Last mit dem Heckträger 1 dann zu dem Fahrzeug personengebunden, das heißt durch Betätigung des Benutzers, zu transportieren. Dort wird dann der Heckträger 1 über die Befestigungseinrichtung 3 an einer Anhängerkupplung des Fahrzeugs festgesetzt, was durch Anheben des Heckträgers 1 zusammen mit der Last und Absenken der Befestigungseinrichtung 3 auf die Anhängerkupplung erfolgen kann.

Auf der der Radseite gegenüberliegenden Querseite des Heckträgers 1 sind zwei Haltestangen 15 vorgesehen, die einen einfachen personengebundenen Transport des Heckträgers 1 ermöglichen. Der Heckträger 1 kann so in der Art einer Schubkarre von einem Benutzer verfahren werden kann.

Der Schwenkbügel 11 kann einen ersten geraden Abschnitt 11 a und einen zweiten geraden Abschnitt 11 b aufweisen, wobei der zweite gerade Abschnitt 11 b gegenüber dem ersten geraden Abschnitt 11a wenigstens um 30°, maximal um 60°, bevorzugt um etwa 45°, abgewinkelt ist. Die beiden geraden Abschnitte 11 a, 11 b sind dazu über einen gebogenen Abschnitt 11c des Schwenkbügels 11 miteinander verbunden.

Jeder Schwenkbügel 11 weist an beiden Enden jeweils eine Bohrung auf. Dadurch lässt sich jeder Schwenkbügel 11 an einem Ende über einen Bolzen 16 schwenkbar an der Halteeinrichtung 12 und damit am Heckträger 1 befestigen. Die an dem jeweils gegenüberliegenden Ende der Schwenkbügel 11 vorgesehenen weiteren Bohrungen dienen zur Lagerung der Radachse 13 und damit der Räder 14.

Die gelenkige Befestigung ermöglicht das Verschwenken des Radträgers 10 und damit der Radachse 13 mit den Rädern 14 um eine Drehachse 17 der Bolzen 16. Damit lässt sich durch Hochschwenken der Räder 14 eine ausreichende Bodenfreiheit beim fahrzeuggebundenen Transport des Heckträgers 1 gewährleisten. Außerdem kann beim fahrzeuggebundenen Transport im Aufnahmeraum 9 befindliches Transportgut zusätzlich durch den Radträger 10 und die Räder 14 gesichert werden.

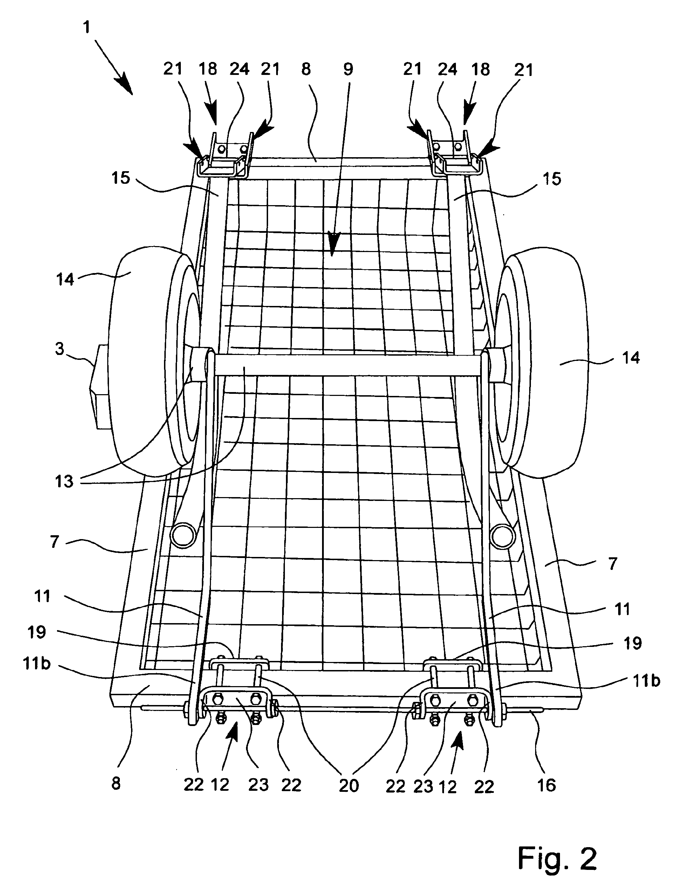

Die am Heckträger 1 angebrachten Haltestangen 15 sind ebenfalls schwenkbar gelagert. Zur schwenkbaren Befestigung sind Gelenke 18 vorgesehen. Durch die schwenkbare Lagerung lassen sich die Haltestange 15 für einen personengebundenen Transport in eine in Fig. 1 gezeigte Schubstellung aufschwenken, in der sie von einem Benutzer leicht ergriffen werden können, um den Heckträger 1 in der Art einer Schubkarre nach dem Abtrennen vom Fahrzeug zu schieben. Für den fahrzeuggebundenen Transport lassen sich die Haltestangen 15 einschwenken in die in Fig. 2 gezeigte Transportstellung.

Jede Halteeinrichtung 12 weist mit Bezug auf Fig. 1, Fig. 6 oder Fig. 7 eine innenliegende Halteplatte 19 auf, die über Haltebolzen 20 mit einem außenliegenden Befestigungsschuh 21 fest verschraubt ist. Der Befestigungsschuh 21 ist U-förmig ausgebildet und weist zwei Seitenstege 22 und eine Bodenplatte 23 auf. Die Bodenplatte 23 liegt dabei gegen den Querrahmenträger 8 seitlich an. An den Seitenstegen 22 ist über den Bolzen 16 der Radträger 10 schwenkbar gelagert, und zwar in einem oberen Bereich der Halteeinrichtung 12, der über den oberen Außenrand des Querrahmenträgers 8 übersteht. Dadurch ist es möglich, den Radträger 10 derart aufzuschwenken, dass der Radträger 10 mit den oberen geraden Abschnitten 11 b auf dem Querrahmenträger 8 aufliegt. Der Heckträger 1 befindet sich dann in einer fahrzeuggebundenen Transportstellung, so wie in Fig. 2 gezeigt. Die gezeigte schwenkbare Befestigung ermöglicht eine stabile und sichere Anordnung des Radträgers 10 mit den Rädern 14 in der personengebundenen Transportstellung unterhalb der Transportfläche des Heckträgers 1 (Fig. 1) und in der fahrzeuggebundenen Transportstellung oberhalb der Transportfläche des Heckträgers 1 (Fig. 2). Zur Fixierung des Radträgers 10 in einer bestimmten Stellung bzw. Position können nicht dargestellte Sicherungsmittel, wie Sicherungsstifte oder - schrauben, vorgesehen sein.

Gemäß Fig. 2 ist ein durchgehender Bolzen 16 vorgesehen, über den beide Schwenkbügel 11 in den Halteeinrichtungen 12 gelagert sind.

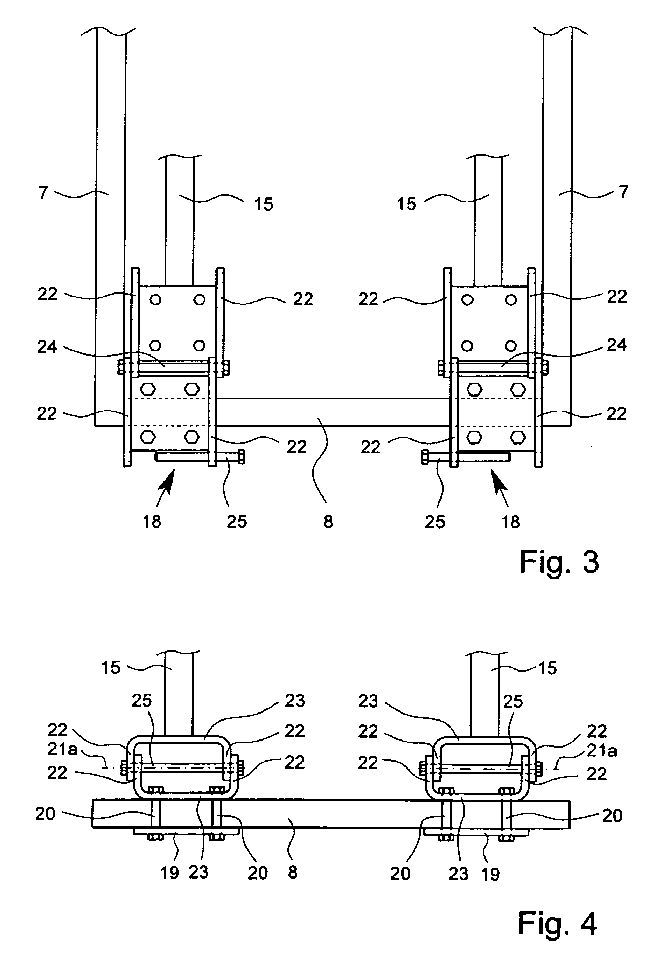

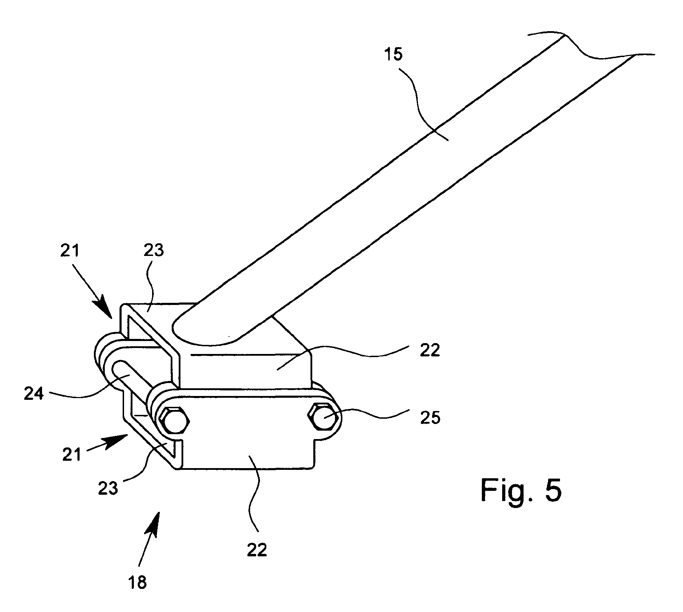

Die Gelenke 18 weisen zwei Befestigungsschuhe 21 auf, die baugleich mit dem Befestigungsschuh 21 einer Halteeinrichtung 12 sind. Die Stirnseiten der Seitenstege 22 der beiden Befestigungsschuhe 21 eines Gelenks 18 sind im geschlossenen Zustand des Gelenks 18 einander zugewandt. Dies ist in Fig. 4 und Fig. 5 gezeigt. Die beiden Befestigungsschuhe 21 sind über einen innenliegenden Schwenkbolzen 24 schwenkbar miteinander verbunden.

Die beiden Befestigungsschuhe 21 sind mit Blick auf die Schwenkachse 21a bzw. in einer Queransicht des Tragkörpers 2 gemäß Fig. 4 seitlich in Querrichtung zueinander versetzt angeordnet. Dadurch lässt sich ein geschlossener Zustand eines Gelenks 18 durch Aufeinanderzuschwenken der Befestigungsschuhe 21 erreichen.

Zum Arretieren des Gelenks 18 in dem in Fig. 4 gezeigten geschlossenen Zustand ist ein Sicherungsbolzen 25 vorgesehen, der in Fig. 3 gezeigt ist.

Ein unterer Befestigungsschuh 21 eines Gelenks 18 ist gegen eine Halteplatte 19 über Haltebolzen 20 verspannt. Der untere Befestigungsschuh 21 liegt von oben auf dem der Radseite gegenüberliegenden Querrahmenträger 8 auf. Mit der Bodenplatte 23 des oberen Befestigungsschuhs 21 ist eine Haltestange 15 verschweißt. Die gezeigte schwenkbare Befestigung der Haltestangen 15 ermöglicht deren stabile und sichere Anordnung in der personengebundenen Transportstellung, in der sich die Haltestangen 15 im Wesentlichen über die gesamte Länge seitlich über den Tragkörper 2 hinaus erstrecken (Fig. 1), und in der fahrzeuggebundenen Transportstellung oberhalb der Transportfläche des Heckträgers 1 (Fig. 2).

Im Ergebnis lassen sich sowohl die Räder 14 als auch die Haltestangen 15 durch Verschwenken platzsparend auf dem Tragkörper 2 für einen fahrzeuggebundenen Transport anordnen. Durch Verschwenken der Räder 14 und/oder der Haltestangen 15 in den in Fig. 2 gezeigten Transportzustand kann eine auf dem Tragkörper 2 abgelegte Last durch Einklemmen zwischen den Rädern 14 bzw. den Haltestangen 15 und dem Tragkörper 2 gesichert werden.

Die abgewinkelten freien Enden der Haltestangen 15 weisen Haltegriffe 26 zum sicheren Fassen der Haltestangen 15 auf. Des Weiteren können die Haltestangen 15 zusätzlich durch eine Querstrebe 27 versteift sein. Vorzugsweise sind die Haltestangen 15 mit der Querstrebe 27 verschweißt. Darüber hinaus bietet die Querstrebe 27 die Möglichkeit, im Aufnahmeraum 9 befindliches Transportgut durch Einschwenken der Haltestangen 15 in den in Fig. 2 gezeigten Transportzustand einzuklemmen.

Um eine platzsparende Anordnung der Haltestangen 15 auf dem Tragkörper 2 in dem in Fig. 2 gezeigten fahrzeuggebundenen Transportzustand zu erreichen, kann die lichte Weite zwischen den Haltestangen 15 im fahrzeuggebundenen Transportzustand von einer gegenüber der Radseite liegenden Befestigungsseite der Haltestangen 15 an dem Tragkörper 2 in Richtung zu der gegenüberliegenden Radseite des Tragkörpers 2 abschnittsweise abnehmen, so dass die Haltestangen 15 nicht parallel zu den Längsrahmenträgern 7 verlaufen, sondern abschnittsweise nach innen abgebogen oder abgewinkelt sind. Dadurch lässt sich eine Last leichter einklemmen und es ist sichergestellt, dass die Haltestangen 15 beim Einschwenken nicht mit den Längsrahmenträgern 7 kollidieren können.

Um eine platzsparende Anordnung der Räder 14 bzw. des Radträgers 10 auf dem Tragkörper 2 in dem in Fig. 2 gezeigten fahrzeuggebundenen Transportzustand zu erreichen, weist der Radträger 10 eine zumindest um die doppelte Reifendicke der Räder 14 gegenüber der Breite des Heckträgers 1 bzw. gegenüber dem Abstand zwischen zwei Längsrahmenträgern 7 verringerte Breite auf, so dass die Räder 14 in beiden Transportzuständen innerhalb der den Tragkörper 2 begrenzenden umhüllenden Konturlinie angeordnet sind und im wesentlichen seitlich nicht über den Tragkörper 2 überstehen.

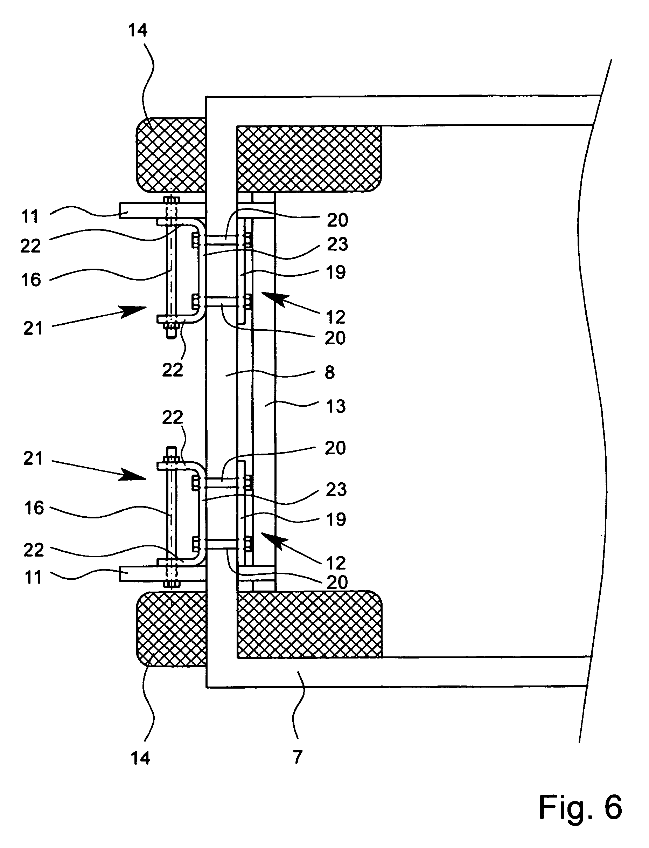

Fig. 6 zeigt eine schematische Teildraufsicht auf den Radträger 10 und die beiden Räder 14 des in Fig. 1 dargestellten Heckträgers 1 im personengebundenen Transportzustand des Heckträgers 1. Die Räder 14 sind schematisch dargestellt, um zu zeigen, dass der Heckträger 1 Räder 14 unterschiedlicher Art und/oder Dicke und/oder aus einem unterschiedlichen Material aufweisen kann. Gemäß Fig. 1 können Räder 14 aus einem Vollmaterial vorgesehen sein. Gemäß Fig. 6 können die Räder 14 luftgefüllte Reifen aufweisen.

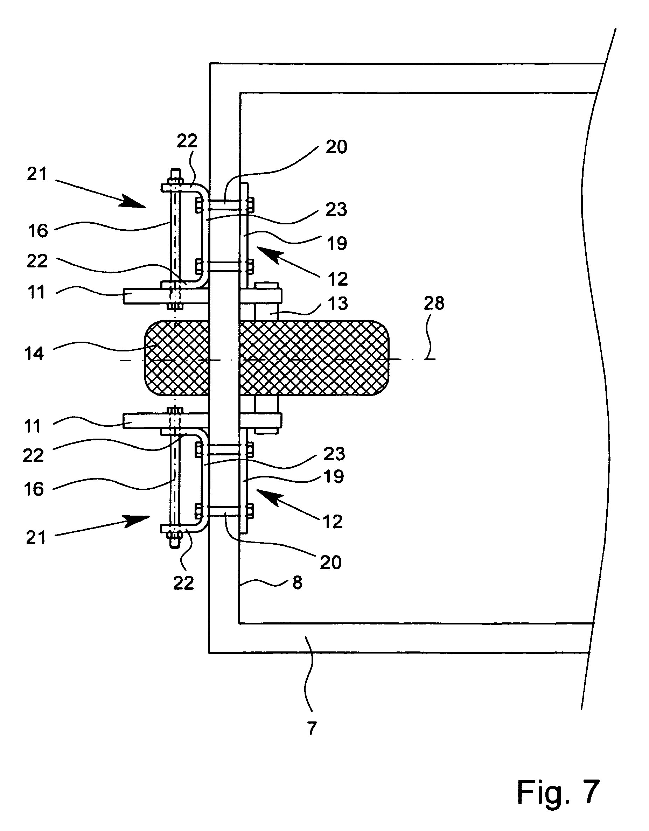

Fig. 7 zeigt eine schematische Draufsicht auf einen Radträger 10 einer zweiten Ausführungsform eines erfindungsgemäßen Heckträgers 1 im personengebundenen Transportzustand des Heckträgers 1, wobei lediglich ein zentral angeordnetes Rad 14 vorgesehen ist. Gemäß Fig. 7 deckt sich dabei die Mittellängsachse des Rades 14 mit der Mittellängsachse 28 des Heckträgers 1.

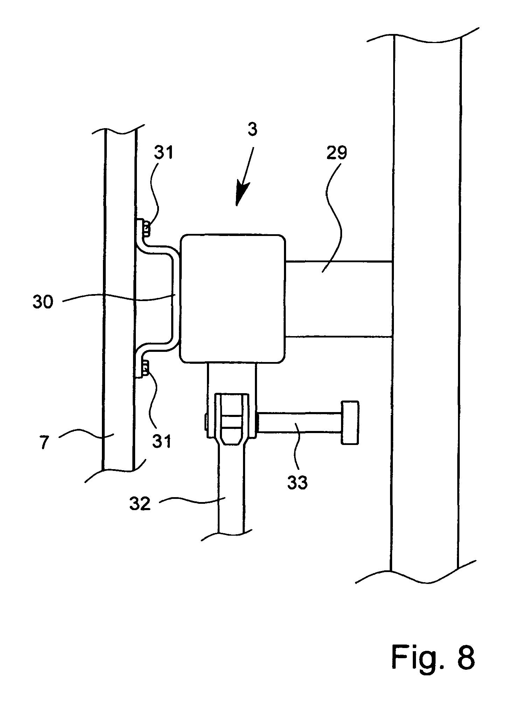

Die Fig. 8 zeigt eine Draufsicht auf die Befestigungseinrichtung 3 zur Anbringung des Heckträgers 1 an eine Anhängerkupplung 29 eines Fahrzeugs. Die Befestigungseinrichtung 3 ist vorzugsweise mit einem U-förmigen Profil 30 über Schrauben 31 mit einem Längsrahmenträger 7 verschraubt. Zur Höhenanpassung kann ein Lochblech mit vorzugsweise länglichen Löchern zwischen der Befestigungseinrichtung 3 und dem Tragkörper 2 vorgesehen sein. Beispielsweise ist es möglich, dass ein Lochblech mit dem Längsrahmenträger 7 fest verbunden, beispielsweise verschweißt ist. An dem Lochblech kann dann das Profil 30 und damit die Befestigungseinrichtung 3 in unterschiedlicher Höhe über Schrauben festgesetzt werden.

Die Befestigungseinrichtung 3 weist einen Spannhebel 32 zum Betätigen von in der Befestigungseinrichtung 3 angeordneten Klemmbacken auf, welche eine Kupplungskugel der Anhängerkupplung 29 und den Hals der Anhängerkupplung 29 im fahrzeuggebundenen Transportzustand fest umschließen. Damit lässt sich der Heckträger 1 kippsicher an der Anhängerkupplung 29 befestigen und halten. Des Weiteren ist zur Arretierung des Spannhebels 32 ein Sicherungsbolzen 33 vorgesehen, mit dem ein ungewolltes Bewegen des Spannhebels 32, was ein ungewolltes Lösen der Befestigungseinrichtung 3 von der Anhängerkupplung 29 zur Folge haben könnte, verhindert wird.

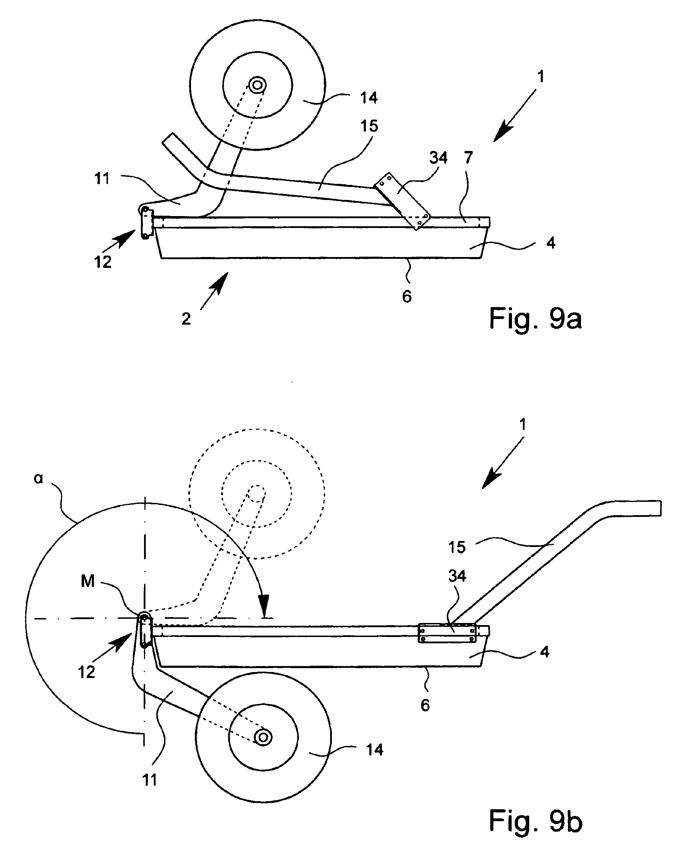

Fig. 9a und Fig. 9b zeigen Seitenansichten einer dritten Ausführungsform eines erfindungsgemäßen Heckträgers 1 im fahrzeuggebundenen Transportzustand (Fig. 9a) und im personengebundenen Transportzustand des Heckträgers 1 (Fig. 9b). Fig. 2 zeigt in Strichlinien zusätzlich die Stellung der Räder 14 in der fahrzeuggebundenen Transportstellung- Bei dem dargestellten Heckträger 1 ist vorgesehen, dass die Haltestangen 15 von außen an den Längsrahmenträgem 7 schwenkbar befestigt sind. Dazu ist jede Haltestange 15 über ein Gelenkteil 34 mit dem Tragkörper 2 verbunden. Die Befestigung der Gelenkteile 34 an dem Tragkörper 2 kann über nicht dargstellten Bolzen, Schrauben oder Spannelemente erfolgen.

Gemäß Fig. 9b kann der Radträger 10 über die Schwenkbügel 11 von einer Endstellung oberhalb der Transportebene in eine Endstellung unterhalb der Transportebene überführt werden. Der Schwenkbügel 11 kann dabei um einen Schwenkwinkel α geschwenkt werden. Vorzugsweise beträgt der Schwenkwinkel α mehr als 180°, insbesondere mehr als 200°, weiter insbesondere mehr als 225°.

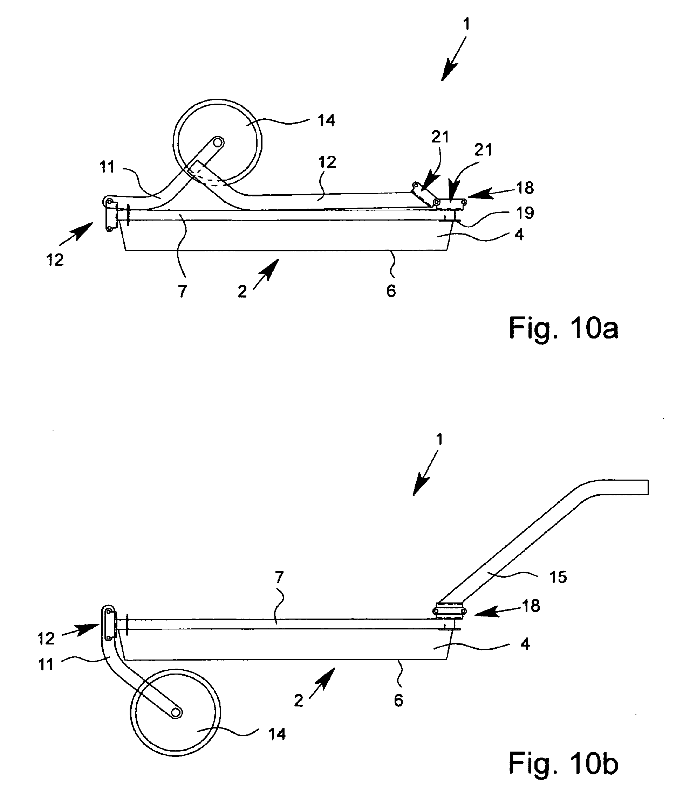

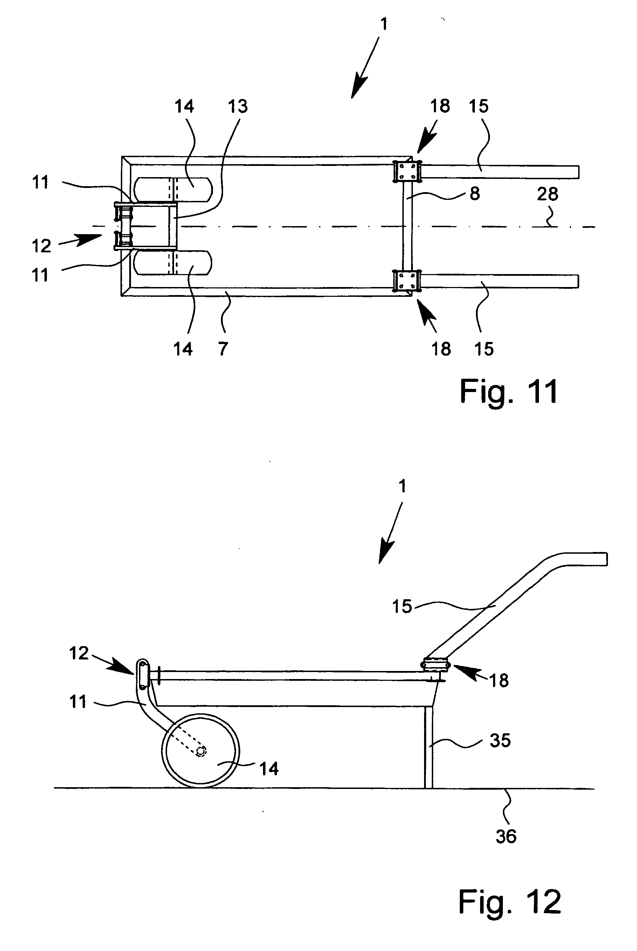

Fig. 10a, Fig. 10b und Fig. 11 zeigen Ansichten einer vierten Ausführungsform eines erfindungsgemäßen Heckträgers im fahrzeuggebundenen Transportzustand (Fig. 10a) und im personengebundenen Transportzustand des Heckträgers (Fig. 10b und Fig. 11), wobei die Haltestangen 15 im fahrzeuggebundenen Transportzustand auf den Längsrahmenträgern 7 aufliegen. Dadurch wird der Aufnahmeraum 9 im fahrzeuggebundenen Transportzustand nicht durch die Haltestangen 15 eingeschränkt.

Bei dem in Fig. 12 gezeigten Heckträger 1 ist wenigstens eine Abstützstange 35 zum Abstützen des Heckträgers 1 auf einem Untergrund 36 nach dem Trennen des Heckträgers 1 vom Fahrzeug vorgesehen. Die Abstützstange 35 kann ein zusätzliches nicht dargestelltes Stützrad aufweisen.

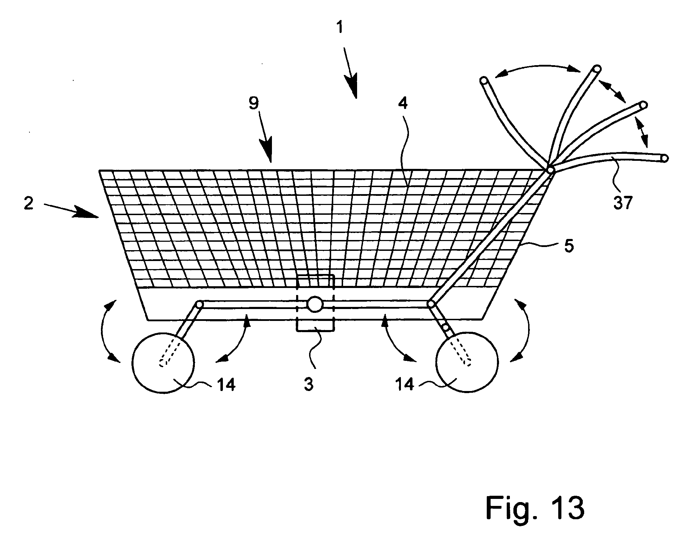

Die Fig. 13 zeigt einen als Einkaufswagen ausgestalteten nicht erfindungsgemäßen Heckträger 1. Dabei sind gitterartige Seitenwände 4, 5 erhöht ausgebildet, so dass sich eine typische Einkaufswagenform mit einem ausreichend großen Aufnahmeraum 9 für Einkäufe ergibt. Der Einkaufswagen lässt sich über eine Befestigungseinrichtung 3 direkt an einer Anhängerzugvorrichtung bzw. Anhängerkupplung 29 eines Fahrzeuges anbringen, wobei der Einkaufswagen beim Verfahren mit dem Kraftfahrzeug lediglich über die Befestigungseinrichtung 3 gehalten ist. Zudem kann der Heckträger 1 aber auch in der typischen Art und Weise eines Einkaufswagen genutzt werden. Im Ergebnis ermöglicht der Heckträger 1 als Einkaufswagen gleichzeitig einen personengebundenen Warentransport beim Einkaufen der Waren, einen fahrzeuggebundenen Warentransport, wobei der Einkaufswagen an einem Fahrzeug befestigt ist, und einen personengebundenen Abtransport der Waren am Zielort.

Der Heckträger 1 weist vier Räder 14 auf, die ebenfalls schwenkbar an dem Tragkörper 2 gelagert sind. Die Räder 14 lassen sich in Richtung zur Unterseite des Tragkörpers 2 aufschwenken und in eine angehobene Stellung, in der sich der Heckträger 1 in einer fahrzeuggebundenen Transportstellung befindet. In Fig. 13 ist jedoch die personengebundene Transportstellung des Einkaufswagen gezeigt, wenn dieser zum Transport von Wareneinkäufen dient.

Zudem weist der Einkaufswagen einen schwenkbar an dem Tragkörper 2 gelagerten Griffbügel 37 auf, der in der personengebundenen Transportstellung seitlich über die Seitenwand 5 des Tragkörpers 2 übersteht und sich für den fahrzeuggebundenen Transport in den von den Seitenwänden 4, 5 gebildeten Aufnahmeraum 9 einschwenken lässt. Damit werden eine geringe Baugröße und ein ausreichender Bodenabstand beim Verfahren des Heckträgers 1 mit einem Fahrzeug sichergestellt.

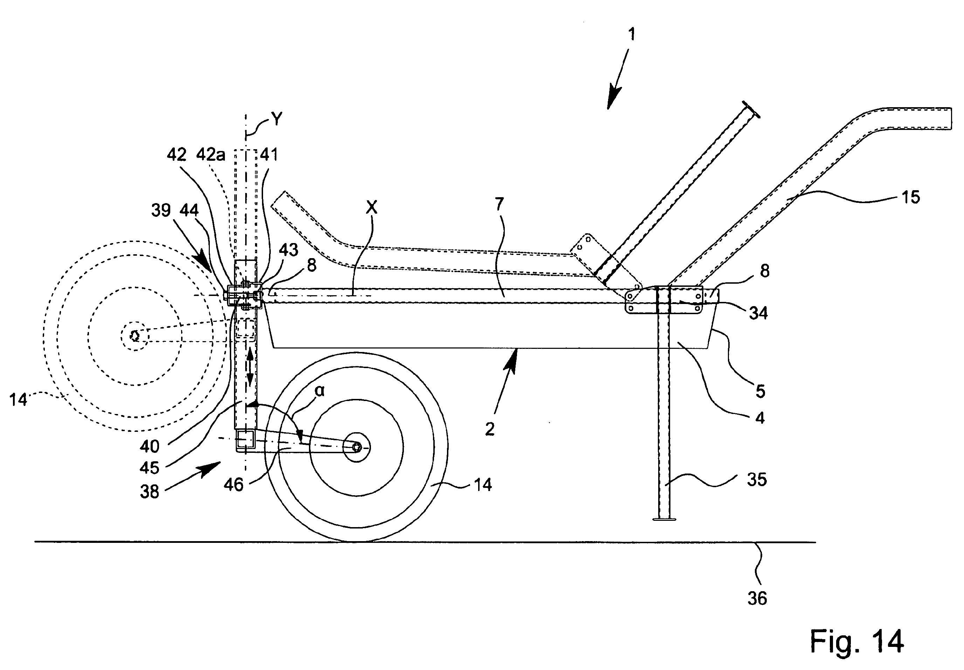

Fig. 14 zeigt eine Seitenansicht einer siebten Ausführungsform eines erfindungsgemäßen Heckträgers 1 im personengebundenen Transportzustand des Heckträgers 1. In Strichlinien ist der fahrzeuggebundene Transportzustand gezeigt. Zwei Haltestangen 15 sind über Gelenkteile 34 schwenkbar an Längsrahmenträgern 7 eines Tragkörpers 2 befestigt. Abstützstangen 35 zum Abstützen des Heckträgers 1 auf einem Untergrund 36 sind auf beiden Längsseiten des Heckträgers 1 vorgesehen und mit den Gelenken 34 starr verbunden. Die Abstützstangen 35 lassen sich dementsprechend mit den Haltestangen 15 aus der personengebundenen Transportstellung in die fahrzeuggebundene Transportstellung auf- bzw. umschwenken.

An einer Radseite des Heckträgers 1 ist ein Radträger 38 mit einem Rad 14 vorgesehen. Der Radträger 38 ist über eine Schnellspanneinrichtung 39 lösbar mit dem Tragkörper 2 verbunden. Durch die Schnellspanneinrichtung 39 lässt sich der Radträger 38 in einfacher Weise am Tragkörper 2 festsetzen und gegebenenfalls wieder von diesem lösen. Mit der Schnellspanneinrichtung 39 lässt sich ein Rohrstück 45 des Radträgers 38 festsetzen. Mit dem Rohrstück 45 sind zwei Achsbügel 46 starr verbunden, insbesondere verschweißt, wobei zwischen den beiden Achsbügeln 46 das Rad 14 drehbar gelagert ist. Der Winkel α zwischen der Mittellängsachse durch das Rohrstück 45 und der Mittellängsachse durch die Achsbügel 46 beträgt vorzugsweise ca. 80° bis 100°.

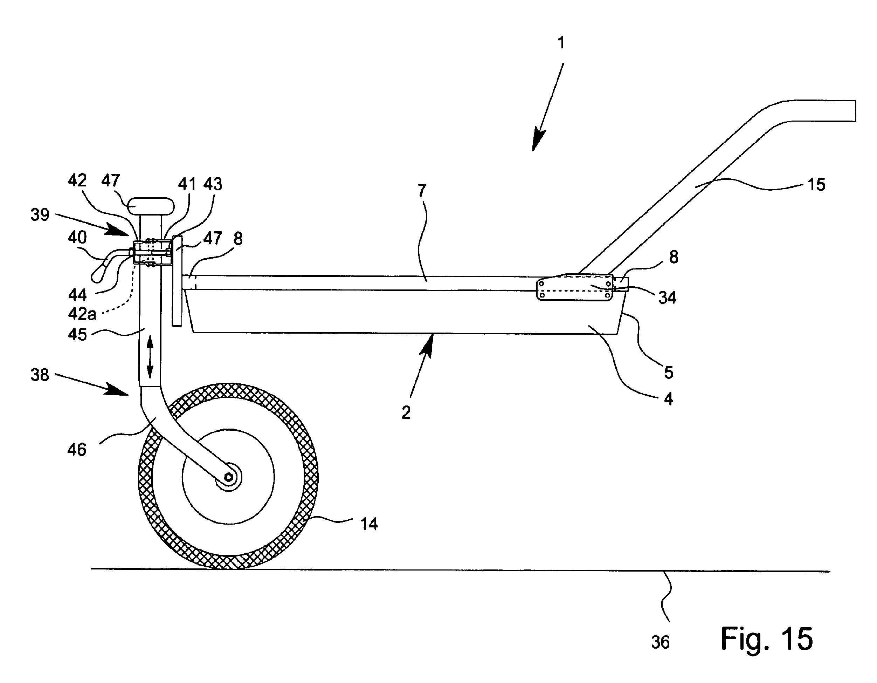

Zum schnellen und einfachen Betätigen der Schnellspanneinrichtung 39 weist diese eine Spannschraube 40 auf, über die sich zwei U-förmige Spannprofile 41, 42, die schwenkbar über einen Bolzen 42a miteinander verbunden sind, gegeneinander verspannen lassen. Die Spannschraube 40 kann gemäß Fig. 15 auch als Spannhebel ausgebildet sein. Dabei ist ein erstes Spannprofil 41 fest mit dem Tragkörper 2 verbunden. Zum Verspannen der Spannprofile 41, 42 lässt sich die Spannschraube 40 von außen in das zweite äußere Spannprofil 42 einstecken und mit einem endseitigen Gewindeabschnitt in eine am ersten Spannprofil 41 festgesetzte Mutter 43 einschrauben, so dass ein Schraubenkopf 44 bzw. Vorsprung gegen das zweite Spannprofil 42 von außen zur Anlage kommt und bei weiterem Eindrehen der Spannschraube 40 die beiden Spannprofile 41, 42 gegeneinander verspannt.

Die Schnellspanneinrichtung 39 lässt es in einfacher Weise zu, den Radträger 38 nach dem Lösen der Schnellspanneinrichtung 39 um die vertikale Schwenkachse Y nach außen zu schwenken, so dass das Rad 14 zunächst seitlich vom Tragkörper 2 angeordnet ist. Anschließend kann dann das Rohrstück 45 zusammen mit dem Rad 14 in Pfeilrichtung angehoben und im angehobenen Zustand mittels der Schnellspanneinrichtung 39 in unterschiedlicher Höhe an dem Tragkörper 2 festgesetzt werden. Damit wird eine Höhenverstellung des Rades 14 erreicht. Insbesondere kann durch die Höhenverstellung eine ausreichende Bodenfreiheit im fahrzeuggebundenen Transportzustand erreicht werden.

Ergänzend oder alternativ kann auch vorgesehen sein, dass die Schnellspanneinrichtung 39 als solche um eine horizontale Schwenkachse X schwenkbar an dem Tragkörper 2 befestigt ist. Dies lässt es zu, den Radträger 38 zusammen mit dem Rad 14 um vorzugsweise 180° um die Achse X aufzuschwenken bzw. hochzuklappen, um eine noch größere Bodenfreiheit zu erreichen. Es versteht sich, dass Arretiermittel vorgesehen sein können, um die Schnellspanneinrichtung 39 in wenigstens einer ersten Schwenkstellung, bei der das Rad 14 gemäß Fig. 14 auf dem Untergrund 36 aufliegt, und in wenigstens einer zweiten Schwenkstellung, bei der das Rad 14 die maximale Höhenstellung erreicht hat, drehfest am Tragkörper 2 festzusetzen. Im fahrzeuggebundenen Transportzustand lässt sich der Heckträger 1 dann bei umgeklappten Haltestangen 15 und erhöht angeordnetem Rad 14 mit dem Fahrzeug transportieren, ohne dass dazu der Radträger 38 vom Heckträger 2 demontiert werden muss. Die Schnellspanneinrichtung 39 lässt es jedoch ohne weiteres zu, den Radträger 38 für den fahrzeuggebundenen Transport auch vollständig vom Tragkörper 2 zu demontieren.

Fig. 15 zeigt eine Seitenansicht einer achten Ausführungsform eines erfindungsgemäßen Heckträgers 1 im personengebundenen Transportzustand des Heckträgers 1. Bei dem dargestellten Heckträger 1 ist vorgesehen, dass der Radträger 38 zusammen mit der Schnellspanneinrichtung 39 vom Tragkörper 2 abgenommen werden kann. Hierzu ist die Schnellspanneinrichtung 39 über ein nicht im einzelnen dargestelltes Aufnahmeteil 47 mit Schnellverschluss an dem Tragkörper 2 rastend und/oder klemmend lösbar befestigt. Zum erleichterten Anheben des Rohrstücks 45 und/oder Drehen des Rades 14 ist am oberen Ende des Rohrstücks 45 ein Bediengriff 47 vorgesehen.

Nach Abnahme der Haltestangen 15 und der Schnellspanneinrichtung 39 mit dem Radträger 38 vom Tragkörper 2 kann dieser beliebig genutzt werden, beispielsweise auch als Fahrradträger.

**Bezugszeichenliste:**

| | | | |
|---|---|---|---|
| 1 | Heckträger | 23 | Bodenplatte |
| 2 | Tragkörper | 24 | Schwenkbolzen |
| 3 | Befestigungsvorrichtung | 25 | Sicherungsbolzen |
| 4 | Seitenwand | 26 | Haltegriff |
| 5 | Seitenwand | 27 | Querstrebe |
| 6 | Boden | 28 | Mittellängsachse |
| 7 | Längsrahmenträger | 29 | Anhängerkupplung |
| 8 | Querrahmenträger | 30 | Profil |
| 9 | Aufnahmeraum | 31 | Schraube |
| 10 | Radträger | 32 | Spannhebel |
| 11 | Schwenkbügel | 33 | Sicherungsbolzen |
| 11a | Abschnitt | 34 | Gelenkteil |
| 11b | Abschnitt | 35 | Abstützstange |
| 11c | Abschnitt | 36 | Untergrund |
| 12 | Halteeinrichtung | 37 | Griffbügel |
| 13 | Radachse | 38 | Radträger |
| 14 | Rad | 39 | Schnellspanneinrichtung |
| 15 | Haltestange | 40 | Spannschraube |
| 16 | Bolzen | 41 | Spannprofil |
| 17 | Drehachse | 42 | Spannprofil |
| 18 | Gelenk | 42a | Bolzen |
| 19 | Halteplatte | 43 | Mutter |
| 20 | Haltebolzen | 44 | Vorsprung |
| 21 | Befestigungsschuh | 45 | Rohrstück |
| 21a | Schwenkachse | 46 | Achsbügel |
| 22 | Seitensteg | 47 | Bediengriff |

## Patentansprüche

1. Heckträger (1) zur vorzugsweise heckseitigen Anbringung an Fahrzeugen für den Transport von Lasten in einem fahrzeuggebundenen Transportzustand des Heckträgers (1), mit einem eine Transportfläche aufweisenden Tragkörper (2) zur Aufnahme der Last und/oder Ablage der Last auf der Transportfläche, mit einer Befestigungseinrichtung (3) zur abnehmbaren Anbringung des Heckträgers (1) an dem Fahrzeug, insbesondere an einem Personenkraftfahrzeug, und mit wenigstens einem Rad (14) zum rollenden Transport des Heckträgers (1) in einem vom Fahrzeug getrennten personengebundenen Transportzustand des Heckträgers (1), wobei die Radachse (13) zumindest im personengebundenen Transportzustand gegenüber der Mitte der Transportfläche nach außen in Richtung zu einer ersten Außenseite des Tragkörpers (2) versetzt angeordnet ist und wobei lediglich auf der ersten Außenseite des Tragkörpers (2) das wenigstens eine Rad (14) vorgesehen ist, **dadurch gekennzeichnet, dass** die Befestigungseinrichtung (3) mit einer fahrzeugseitigen Kugelkopf-Anhängerzugvorrichtung (29) des Fahrzeugs durch Aufsetzen eines Kupplungselementes der Befestigungseinrichtung (3) auf eine Kupplungskugel der Kugelkopf-Anhängerzugvorrichtung (29) verbindbar ist und dass das Rad (14) höhenverstellbar aus einer abgesenkten Stellung im personengebundenen Transportzustand in eine angehobene Stellung im fahrzeuggebundenen Transportzustand an dem Heckträger (1) befestigt ist.

2. Heckträger nach Anspruch 1, **dadurch gekennzeichnet, dass** das Rad (14), und, vorzugsweise, ein zur Lagerung des Rades (14) ausgebildeter Radträger (10), als separates Bauteil bedarfsweise mit dem Heckträger (1) verbindbar bzw. vom Heckträger (1) abnehmbar ist.

3. Heckträger nach Anspruch 1 oder 2, **dadurch gekennzeichnet, dass** ein zur Lagerung des Rades (14) ausgebildeter Radträger (10) höhenverstellbar ist aus einer abgesenkten Stellung im personengebundenen Transportzustand in eine angehobene Stellung im fahrzeuggebundenen Transportzustand und/oder schwenkbar an dem Trägkörper (2) befestigt ist, und/oder dass das Rad (14) und, vorzugsweise, ein zur Lagerung des Rades (14) ausgebildeter Radträger (10) in einer Stellung in personengebundenen Transportzustand und/oder im fahrzeuggebundenen Transportzustand arretierbar ist.

4. Heckträger nach einem der vorhergehenden Ansprüche, **dadurch gekennzeichnet, dass** eine Radachse (13) zum Lagern und Tragen des Rades (14) im personengebundenen Transportzustand unterhalb einer die Transportfläche aufweisenden Transportebene und im fahrzeuggebundenen Transportzustand oberhalb der Transportebene angeordnet ist und/oder dass das Rad (14) und, vorzugsweise, zumindest Teile eines zur Lagerung des Rades (14) ausgebildeten Radträgers (10), im personengebundenen Transportzustand zumindest bereichsweise unterhalb der Transportfläche und/oder im fahrzeuggebundenen Transportzustand zumindest bereichsweise oberhalb der Transportfläche angeordnet ist.

5. Heckträger nach einem der vorhergehenden Ansprüche 2 bis 4, **dadurch gekennzeichnet, dass** der Tragkörper (2) einen Aufnahmeraum (9) zur Aufnahme der Last aufweist und dass eine Radachse (13) zum Lagern und Tragen des Rades (14) und, vorzugsweise, das Rad (14) und/oder das Radträger (10), im fahrzeuggebundenen Transportzustand nicht in den Aufnahmeraum (9) eingreift.

6. Heckträger nach einem der vorhergehenden Ansprüche, **dadurch gekennzeichnet, dass** wenigstens ein Radpaar vorgesehen ist, wobei ein Radpaar wenigstens zwei Räder (14) aufweist.

7. Heckträger nach einem der vorhergehenden Ansprüche, **dadurch gekennzeichnet, dass** zusätzlich zu dem Rad (14) wenigstens ein mit dem Tragkörper (2) verbundenes Abstützelement (35) vorgesehen ist, wobei das Abstützelement (35) in einem vom Fahrzeug getrennten abgestützten Zustand des Heckträgers (1) auf einem Untergrund (36) aufstellbar und der Tragkörper (2) über das Abstützelement (35) abstützbar ist.

8. Heckträger nach einem der vorhergehenden Ansprüche, **dadurch gekennzeichnet, dass** wenigstens eine Haltestange (15) zum Anheben, Bewegen und Absenken des Heckträgers (1) im personengebundenen Transportzustand vorgesehen ist.

9. Heckträger nach Anspruch 8, **dadurch gekennzeichnet, dass** die Haltestange (15) als separates Bauteil bedarfsweise mit dem Heckträger (1) verbindbar bzw. vom Heckträger (1) abnehmbar ist und/oder höhenverstellbar ist aus einer abgesenkten Stellung im fahrzeuggebundenen Transportzustand in eine angehobene Stellung im personengebundenen Transportzustand und/oder schwenkbar an dem Tragkörper (2) befestigt ist und/oder oberhalb des Aufnahmeraums (9) angeordnete Schwenkachse verschwenkbar ist.

10. Heckträger nach Anspruche 8 oder 9, **dadurch gekennzeichnet, dass** der Tragkörper (2) einen Aufnahmeraum (9) zur Aufnahme der Last aufweist und dass die Haltestange (15) in der abgesenkten Stellung ausgehend von dem befestigten Ende zumindest bereichsweise in den Aufnahmeraum (9) eintaucht.

11. Heckträger nach einem der vorhergehenden Anspruche 8 bis 10, **dadurch gekennzeichnet, dass** die Haltestange (15) im fahrzeuggebundenen Transportzustand oberhalb der Transportfläche angeordnet ist und sich im personengebundenen Transportzustand im Wesentlichen über den Tragkörper (2) seitlich hinaus erstreckt und/oder dass die Haltestange (15) in wenigstens einer Stellung im personengebundenen Transportzustand und/oder im fahrzeuggebundenen Transportzustand arretierbar ist..

12. Heckträger nach einem der vorhergehenden Ansprüche 8 bis 11, **dadurch gekennzeichnet, dass** zwei Haltestangen (15) auf einer gleichen Außenseite des Tragkörpers (2) an dem Tragkörper (2) befestigt sind, wobei die lichte Weite zwischen den Haltestangen (15) im fahrzeuggebundenen Transportzustand von einer Befestigungsseite der Haltestangen (15) an dem Tragkörper (2) in Richtung zu einer gegenüberliegenden Außenseite des Tragkörpers (2) zumindest abschnittsweise abnimmt.

13. Heckträger nach einem der vorhergehenden Ansprüche, **dadurch gekennzeichnet, dass** der Tragkörper (2) eine Wanne oder einen Gitterkorb oder ein Netz zur Aufnahme der Last aufweist.

14. Heckträger nach einem der vorhergehenden Ansprüche, **dadurch gekennzeichnet, dass** wenigstens eine Antriebseinrichtung für einen motorischen Antrieb des Rades (14) vorgesehen ist.

15. Heckträger nach einem der vorhergehenden Ansprüche 8 bis 14, **dadurch gekennzeichnet, dass** der Radträger (10) zwei mit einer Radachse (13) eines Radpaares verbundene Schwenkbügel (11) aufweist, wobei die Schwenkbügel (11) schwenkbar an dem Tragkörper (2) befestigt sind und wobei die Haltestangen (15) im fahrzeuggebundenen Transportzustand zwischen den Rädern (14) des Radpaares und den Schwenkbügeln (11) angeordnet sind.

## Claims

1. A rear carrier (1) preferably for mounting at the rear end of vehicles for the transport of loads in a vehicle transport state of the rear carrier (1), with a carrying body (2) having a transport surface for receiving the load and/or for deposition of the load on the transport surface, with a fastening device (3) for removable mounting of the rear carrier (1) on the vehicle, particularly on a passenger vehicle, and with at least one wheel (14) for rolling transport of the rear carrier (1) in a personal transport state of the rear carrier (1) separate from the vehicle, wherein the whee axle (13) at least in the personal transport state is arranged offset to the middle of the transport surface outwards in the direction towards a first external side of the carrier body (2) and wherein at least one wheel (14) is provided only on the first external side of the carrier body (2), **characterized in that** the fastening device (3) can be connected with a spherical-head trailer towing device (29) of the vehicle on the vehicle side by placing a coupling element of the fastening device (3) on a coupling ball of the spherical-head trailer towing device (29) and that the wheel (14) is fastened to the rear carrier (1) height adjustably from a lowered position in the personal transport state into a raised position in the vehicle transport state.

2. A rear carrier according to Claim 1, **characterized in that** the wheel (14), and, preferably, a wheel carrier (10) designed for the storage of the wheel (14), can be connected as a separate component as required with the rear carrier (1) or can be removed from the rear carrier (1).

3. A rear carrier according to Claim 1 or 2, **characterized in that** a wheel carrier (10) designed for the storage of the wheel (14) is height adjustable from a lowered position in the personal transport state into a raised position in the vehicle transport state and/or is pivot-mounted on the carrier body (2), and/or that the wheel (14) and, preferably a wheel carrier (10) designed for the storage of the wheel (14), can be locked in position in the personal transport state and/or in the vehicle transport state.

4. A rear carrier according to one of the preceding claims, **characterized in that** a wheel axle (13) is arranged for the storage and carrying of the wheel (14) in the personal transport state underneath a transport plane having the transport surface and in the vehicle transport state above the transport plane and/or that the wheel (14) and, preferably, at least parts of the wheel carrier (10) designed for the storage of the wheel (14) is arranged in the personal transport state at least in certain areas underneath the transport surface and/or in the vehicle transport state at least in certain areas above the transport surface.

5. A rear carrier according to any one of the preceding Claims 2 to 4, **characterized in that** the carrier body (2) has a receiving space (9) for receiving the load and that a wheel axle (13) for the storage and carrying of the wheel (14) and preferably, the wheel (14) and/or the wheel carrier (10) does not engage in the receiving space (9) in the vehicle transport state.

6. A rear carrier according to one of the preceding claims, **characterized in that** at least one pair of wheels is provided, wherein a pair of wheels has at least two wheels (14).

7. A rear carrier according to one of the preceding claims, **characterized in that** in addition to the wheel (14) at least one support element (35) connected with the carrier body (2) is provided, wherein the support element (35) can be set up in a supported state of the rear carrier (1) separate from the vehicle on a subsurface (36) and the carrier body (2) can be supported via the support element (35).

8. A rear carrier according to one of the preceding claims, **characterized in that** at least one holding rod (15) is provided for raising, moving and lowering the rear carrier (1) in the personal transport state.

9. A rear carrier according to Claim 8, **characterized in that** the holding rod (15) can be connected as a separate component as required with the rear carrier (1) or can be removed from the rear carrier (1) and/or is height adjustable from a lowered position in the vehicle transport state into a raised position in the personal transport state and/or is pivot-mounted on the carrier body (2) and/or can be pivoted about a pivot axis arranged above the receiving space (9).

10. A rear carrier according to Claim 8 or 9, **characterized in that** the carrier body (2) has a receiving space (9) for receiving the load and that the holding rod (15) in the lowered position starting from the fixed end dips into the receiving space (9) at least in certain areas.

11. A rear carrier according to any one of the preceding Claims 8 to 10, **characterized in that** the holding rod (15) in the vehicle transport state is arranged above the transport surface and extends in the personal transport state substantially beyond the carrier body (2) laterally and/or that the holding rod (15) can be locked in at least one position in the personal transport state and/or in the vehicle transport state.

12. A rear carrier according to any ane of the preceding Claims 8 to 11, **characterized in that** the holding rods (15) are fastened to the carrier body (2) on a same external side of the carrier body (2), wherein the clear width between the holding rods (15) in the vehicle transport state from a mounting side of the holding rods (15) to the carrier body (2) in the direction towards an opposite external side of the carrier body (2) decreases at least in sections.

13. A rear carrier according to one of the preceding claims, **characterized in that** the carrier body (2) has a trough or a wire basket or a mesh for receiving the load.

14. A rear carrier according to one of the preceding claims, **characterized in that** at least one drive unit is provided for a motorized drive of the wheel (14).

15. A rear carrier according to any one of the preceding Claims 8 to 14, **characterized in that** the wheel carrier (10) has two pivot brackets (11) connected with a wheel axle (13) of a pair of wheels, wherein the pivot brackets (11) can be pivot-mounted on the carrier body (2) and wherein the holding rods (15) are arranged in the vehicle transport state between the wheels (14) of the pair of wheels and the pivot brackets (11).

## Revendications

1. Porte-charge arrière (1) destiné de préférence à être mis en place côté arrière sur des véhicules pour le transport de charges dans un état de transport, relié au véhicule, du porte-charge arrière (1), avec un corps de support (2), présentant une surface de transport, destiné à recevoir la charge et/ou à remiser la charge sur la surface de transport, avec un système de fixation (3) destiné à la mise en place amovible du porte-charge arrière (1) sur le véhicule, en particulier sur une voiture particulière, avec au moins une roue (14) pour le transport roulant du porte-charge arrière (1) dans un état de transport du porte-charge arrière (1) séparé du véhicule et relié à une personne, l'essieu de roue (13) étant, au moins dans l'état de transport relié à une personne, disposé de façon décalée vers l'extérieur, par rapport au milieu de la surface de transport, en direction d'un premier côté extérieur du corps de support (2), et la roue (14) au moins au nombre de un étant prévue uniquement sur le premier côté extérieur du corps de support (2), **caractérisé en ce que** le système de fixation (3) peut être raccordé à un dispositif de traction de remorque à tête sphérique (29), côté véhicule, du véhicule par la pose d'un élément d'accouplement du système de fixation (3) sur une sphère d'accouplement du dispositif de traction de remorque à tête sphérique (29), et **en ce que** la roue (14) est fixée sur le porte-charge arrière (1) de façon réglable en hauteur à partir d'une position abaissée dans l'état de transport relié à la personne vers une position relevée dans l'état de transport relié au véhicule.

2. Porte-charge arrière selon la revendication 1, **caractérisé en ce que** la roue (14) et, de préférence, un support de roue (10) constitué pour supporter la roue (14) en tant composant séparé peuvent en cas de besoin être raccordés au porte-charge arrière (1) ou respectivement être enlevés du porte-charge arrière (1).

3. Porte-charge arrière selon la revendication 1 ou 2, **caractérisé en ce qu'**un support de roue (10) constitué pour supporter la roue (14) est réglable en hauteur à partir d'une position abaissée dans l'état de transport relié à la personne vers une position relevée dans l'état de transport relié au véhicule et/ou est fixé de façon pivotante sur le corps de support (2), et/ou **en ce que** la roue (14) et, de préférence, un support de roue (10) constitué pour supporter la roue (14) peuvent être bloqués dans une position dans l'état de transport relie à la personne et/ou dans l'état de transport relié au véhicule.

4. Porte-charge arrière selon l'une des revendications précédentes, **caractérisé en ce qu'**un essieu de roue (13) pour supporter et porter la roue (14) est, dans l'état de transport relié à la personne, disposé au-dessous d'un niveau de transport présentant la surface de transport et est, dans l'état de transport relié au véhicule, disposé au-dessus du niveau de transport et/ou **en ce que** la roue (14) et, de préférence, au moins des parties d'un support de roue (10) constitué pour supporter la roue (14), sont, dans l'état de transport relié à la personne, disposés au moins par tronçons au-dessous de la surface de transport et/ou, dans l'état de transport relié au véhicule, disposés au moins par tronçons au-dessus de la surface de transport.

5. Porte-charge arrière selon l'une des revendications précédentes 2 à 4, **caractérisé en ce que** le corps de support (2) présente un espace de réception (9) pour la réception de la charge et **en ce qu'**un essieu de roue (13) pour supporter et porter la roue (14) et, de préférence, la roue (14) et/ou le support de roue (10), n'engrènent pas dans l'espace de réception (9) dans l'état de transport relié au véhicule.

6. Porte-charge arrière selon l'une des revendications précédentes, **caractérisé en ce qu'**il est prévu au moins une paire de roues, une paire de roues présentant au moins deux roues (14).

7. Porte-charge arrière selon l'une des revendications précédentes, **caractérisé en ce que**, en plus de la roue (14), il est prévu au moins un élément d'appui (35) raccordé au corps de support (2), l'élément d'appui (35) pouvant être, dans un état du porte-charge arrière (1) appuyé séparé du véhicule, placé sur un fond (36), et le corps de support (2) pouvant être appuyé sur l'élément d'appui (35).

8. Porte-charge arrière selon l'une des revendications précédentes, **caractérisé en ce qu'**il est prévu au moins une tige de retenue (15) pour le soulèvement, le déplacement et l'abaissement du porte-charge arrière (1) dans l'état de transport relié à la personne.

9. Porte-charge arrière selon la revendication 8, **caractérisé en ce que** la tige de retenue (15), en tant que composant séparé, peut en cas de besoin être raccordée au porte-charge arrière (1) ou respectivement enlevée du porte-charge arrière (1) et/ou est réglable en hauteur à partir d'une position abaissée dans l'état de transport relié au véhicule vers une position relevée dans l'état de transport relié à la personne et/ou est fixée de façon pivotante sur le corps de support (2) et/ou peut pivoter axe de pivotement disposé au-dessus de l'espace de réception (9).

10. Porte-charge arrière selon les revendications 8 ou 9, **caractérisé en ce que** le corps de support (2) présente un espace de réception (9) pour la réception de la charge, et **en ce que** la tige de retenue (15), dans la position abaissée, plonge au moins par tronçons dans l'espace de réception (9) à partir de l'extrémité fixée.

11. Porte-charge arrière selon l'une des revendications précédentes 8 à 10, **caractérisé en ce que** la tige de retenue (15), dans l'état de transport relié au véhicule, est disposée au-dessus de la surface de transport et, dans l'état de transport relié à la personne, s'étend essentiellement latéralement au-delà du corps de support (2) et/ou **en ce que** la tige de retenue (15) peut être bloquée dans au moins une position dans l'état de transport relié à la personne et/ou dans l'état de transport relié au véhicule.

12. Porte-charge arrière selon l'une des revendications précédentes 8 à 11, **caractérisé en ce que** deux tiges de retenue (15) sont fixées sur le corps de support (2) sur un même côté extérieur du corps de support (2), la largeur libre entre les tiges de retenue (15) dans l'état de transport relié au véhicule diminuant au moins par tronçons à partir d'un côté de fixation des tiges de retenue (15) sur le corps de support (2) en direction d'un côté extérieur opposé du corps de support (2).

13. Porte-charge arrière selon l'une des revendications précédentes, **caractérisé en ce que** le corps de support (2) présente un baquet ou une corbeille grillagée ou un filet pour la réception de la charge.

14. Porte-charge arrière selon l'une des revendications précédentes, **caractérisé en ce qu'**il est prévu au moins un système d'entraînement pour un entraînement motorisé de la roue (14).

15. Porte-charge arrière selon l'une des revendications précédentes 8 à 14, **caractérisé en ce que** le support de roue (10) présente deux étriers pivotants (11) raccordés à un essieu de roue (13) d'une paire de roues, les étriers pivotants (11) étant fixés de façon pivotante sur le corps de support (2), et les tiges de retenue (15) étant, dans l'état de transport relié au véhicule, disposées entre les roues (14) de la paire de roues et les étriers pivotants (11).
